# EUROPEAN PATENT SPECIFICATION

(11) **EP 3 443 500 B1**
(45) Date of publication and mention of the grant of the patent: **27.04.2022**
(21) Application number: 16901946.0
(22) Date of filing: 16.05.2016
(51) Int. Cl.: G06F 9/455, G06F 21/44

(54) **SECURITY IN VIRTUALIZED NETWORKS**
SICHERHEIT IN VIRTUALISIERTEN NETZWERKEN
SÉCURITÉ DE RÉSEAU VIRTUALISÉ

(43) Date of publication of application: 20.02.2019
(73) Proprietor: Nokia Technologies Oy, 02610 Espoo (FI)
(72) Inventor: PING, Jing, Chengdu, Sichuan 610091 (CN); SCHÄFER, Manfred, 85661 Forstinning (DE); MAHIEU, Stephane, 81829 Munich (DE)
(74) Representative: Swindell & Pearson Limited
(86) International application number: PCT/CN2016/082206
(87) International publication number: WO 2017/197560

(56) References cited:
- WO-A1-2011/066472
- WO-A1-2012/012438
- WO-A1-2012/126506
- WO-A1-2015/168913
- WO-A2-2004/036385
- US-A1- 2016 044 035

## Description

The present invention is in the field of security and trust in telecommunications. More particularly, the present invention is in the field of security and trust in virtualized networks.

### BACKGROUND

With development of communication networks many new technologies, including massive dense networks, interference and mobility management, Internet of Things (loT), Software-Defined Networking (SDN), Network Functions Virtualization (NFV), pervasive and social computing, mobile ad hoc networks (MANET), cognitive radio, cloud computing and so on, are proposed to offer a big data bandwidth and infinite capability of networking for the next generation networks. For example, with the NFV technology, many network functions will be highly virtualized, so that network hardware and software can be separated at most devices (such as servers, switches, routers and base stations) over the whole network, in order to enhance the flexibility of network function provision and updates, as well as reduce the cost of network deployment. Such networks in which at least a part of the network functions are virtualized with the NFV technology are referred to as virtualized networks.

WO2015/168913 A1 discloses a certificate acquisition method and device. A certificate application proxy message sent by a new installed Virtualized Network Function Component (VNFC) instance is received; a certificate request message is sent to a certificate authority; a certificate issued by the certificate authority is acquired. Thus, a new installed VNFC instance does not need to use the current certificate acquisition method for Virtualized Network Functions (VNFs). The problem, caused by the certificate acquisition of a new installed VNFC instance, of complicated process and increased complexity can be effectively avoided. Another VNFC instance already acquiring a certificate in the same network function virtualization infrastructure platform is used instead of a new installed VNFC instance to apply a certificate through the trusted channel established by the anther VNFC instance between the anther VNFC instance and the certificate authority.

US 2016/044035 A1 concerns the security of a mobile cloud framework where multiple virtual machines are part of a cloud trusted domain using certificates issued by a cloud trust server.

### STATEMENT OF INVENTION

The scope of protection sought for various embodiments of the invention is set out by the independent claims. Any examples/embodiments and features described in the specification that do not fall under the scope of the independent claims are to be interpreted as examples useful for understanding various embodiments of the invention.

In a first aspect of the present disclosure there is provided a method for security in a virtualized network comprising: generating an attribute for a virtualised component in a virtualised environment, the attribute being generated so as to be unique to the virtualised component; assigning the attribute to the virtualised component; the attribute comprising a trust attribute.

According to some embodiments the method comprises generating the attribute during an instantiation process of the virtualised component.

According to some embodiments the instantiation comprises generation of a key-pair for the virtualised component.

According to some embodiments the key-pair comprises a trusted public key contained in an instance declaration of the virtualised component and signed by an external security management entity.

According to some embodiments the key-pair is injected into the virtualised component.

According to some embodiments the key-pair comprises a private key generated in the virtualised component.

According to some embodiments, the instantiation comprises a first key-pair for security management, and a second key pair for use at a communication level.

According to some embodiments the trust attribute comprises the key-pair.

According to some embodiments, the key-pair is configured to be trusted by an external public key infrastructure.

According to some embodiments the attribute is usable by the virtualised component for identification thereof in the virtualised network.

According to some embodiments the attribute is usable by the virtualised component for authorization thereof in the virtualised network.

According to some embodiments the attribute is usable by the virtualised component to prove one or more characteristics of the virtualised component.

According to some embodiments the method comprises configuring the attribute to be valid only for a lifetime of the virtualised component.

According to some embodiments the method comprises invalidating the trust attribute in response to a termination of the virtualised component.

According to some embodiments, the attribute is configured to be non-transferable to another virtualised component.

According to some embodiments the method comprises securely assigning the attribute to the virtualised network function using cryptographic means.

According to some embodiments, the cryptographic means comprises a digital signature.

According to some embodiments, the method comprises the virtualised component declaring information of the virtualised component at a time of instantiation of the virtualised component.

According to some embodiments, the method comprises the virtualised component declaring information of the virtualised component at a time after instantiation of the virtualised component.

According to some embodiments, the declared information comprises the trust attribute.

According to some embodiments the declared information comprises information of a property of the virtualized component.

According to some embodiments, the declared information is declared by a first virtualised component, and a second virtualised component uses the declared information to evaluate the first virtualised component.

According to some embodiments, evaluating the first virtualised component comprises authentication of the first virtualised component.

According to some embodiments, the authentication of the first virtualised component comprises obtaining proof that the first virtualised component possesses a valid private key.

According to some embodiments, evaluating the first virtualised component comprises checking an authorization of the first virtualised component.

According to some embodiments, the virtualised component comprises a plurality of virtualised components, each instance of the plurality of virtualised components comprising a respective unique trust attribute.

According to some embodiments the attribute is generated by a security management entity.

According to some embodiments the security management entity is external to the virtualised network.

According to some embodiments the security management entity acts as an intermediary between the virtualised component and a public key infrastructure.

According to some embodiments the security management entity comprises a security orchestrator (SecO).

According to some embodiments the virtualized component comprises a virtualization network function component (VNFC).

In a second aspect there is provided a computer program comprising computer executable instructions which when run on one or more processors perform the method of the first aspect.

In a third aspect there is provided a computer program embodied on a non-transitory computer-readable storage medium, the computer program comprising program code for controlling a process to execute a process, the process comprising generating an attribute for a virtualised component in a virtualised environment, the attribute being generated so as to be unique to the virtualised component; assigning the attribute to the virtualised component; the attribute comprising a trust attribute.

In a fourth aspect there is provided a method for security in a virtualized network comprising: receiving, at a virtualized network component, an attribute to be assigned to the virtualized network component; wherein the attribute is unique to the virtualized component, and wherein the attribute comprises a trust attribute.

According to some embodiments, the trust attribute comprises a plurality of trust attributes.

According to some embodiments, at least one property of the trust attribute is dependent on at least one property of the virtualized network component.

According to some embodiments, the method comprises receiving the attribute during an instantiation process of the virtualised component.

According to some embodiments, the instantiation comprises generation of a key-pair for the virtualised component.

According to some embodiments the key-pair comprises a trusted public key contained in an instance declaration of the virtualised component and signed by an external security management entity.

According to some embodiments the key-pair is injected in to the virtualised component.

According to some embodiments the key-pair comprises a private key generated in the virtualised component.

According to some embodiments, the instantiation comprises a first key-pair for security management, and a second key pair for use at a communication level.

According to some embodiments, the trust attribute comprises the key-pair.

According to some embodiments, the key-pair is configured to be trusted by an external public key infrastructure.

According to some embodiments, the method comprises using the attribute for identification of the virtualised component in the virtualised environment.

According to some embodiments, the method comprises using the attribute for authorization of the virtualised component in the virtualised environment.

According to some embodiments, the method comprises using the attribute to prove one or more characteristics of the virtualised component.

According to some embodiments, the attribute is configured to be valid only for a lifetime of the virtualised component.

According to some embodiments the trust attribute is configured to be invalidated in response to a termination of the virtualised component.

According to some embodiments, the attribute is configured to be non-transferable to another virtualised component.

According to some embodiments, the attribute is securely assigned to the virtualised network function using cryptographic means.

According to some embodiments, the cryptographic means comprises a digital signature.

According to some embodiments, the method comprises the virtualised component declaring information at a time of instantiation of the virtualised component.

According to some embodiments, the method comprises the virtualised component declaring information at a time after instantiation of the virtualised component.

According to some embodiments, the declared information comprises the trust attribute.

According to some embodiments, the declared information comprises information of a property of the virtualized component.

According to some embodiments, the declared information is declared by a first virtualised component, and a second virtualised component uses the declared information to evaluate the first virtualised component.

According to some embodiments, evaluating the first virtualised component comprises authentication of the first virtualised component.

According to some embodiments, the authentication of the first virtualised component comprises obtaining proof that the first virtualised component possesses a valid private key.

According to some embodiments, evaluating the first virtualised component comprises checking an authorization of the first virtualised component.

According to some embodiments, the virtualised component comprises a plurality of virtualised components, each instance of the plurality of virtualised components comprising a respective unique trust attribute.

According to some embodiments, the attribute is generated by a security management entity.

According to some embodiments, the security management entity is external to the virtualised network.

According to some embodiments, the security management entity acts as an intermediary between the virtualised component and a public key infrastructure.

According to some embodiments, the security management entity comprises a security orchestrator (SecO).

According to some embodiments, the virtualized component comprises a virtualization network function component (VNFC).

In a fifth aspect there is provided a computer program comprising computer executable instructions which when run on one or more processors perform the method of the fourth aspect.

In a sixth aspect there is provided a computer program embodied on a non-transitory computer-readable storage medium, the computer program comprising program code for controlling a process to execute a process, the process comprising receiving, at a virtualized network component, an attribute to be assigned to the virtualized network component; wherein the attribute is unique to the virtualized component, and wherein the attribute comprises a trust attribute.

In a seventh aspect there is provided an apparatus comprising: at least one processor; and at least one memory including computer program code; the at least one memory and the computer program code configured to, with the at least one processor, cause the apparatus at least to: generate an attribute for a virtualised component in a virtualised environment, the attribute being generated so as to be unique to the virtualised component; assign the attribute to the virtualised component; the attribute comprising a trust attribute.

According to some embodiments the apparatus is configured to generate the attribute during an instantiation process of the virtualised component.

According to some embodiments the apparatus is configured to generate a key-pair for the virtualised component for the instantiation.

According to some embodiments the key-pair comprises a trusted public key contained in an instance declaration of the virtualised component and signed by an external security management entity.

According to some embodiments the apparatus is configured to cause the key-pair to be injected in to the virtualised component.

According to some embodiments the key-pair comprises a private key generated in the virtualised component.

According to some embodiments, the instantiation comprises a first key-pair for security management, and a second key pair for use at a communication level.

According to some embodiments the trust attribute comprises the key-pair.

According to some embodiments, the key-pair is configured to be trusted by an external public key infrastructure.

According to some embodiments the attribute is configured to be usable by the virtualised component for identification thereof in the virtualised network.

According to some embodiments the attribute is configured to be usable by the virtualised component for authorization thereof in the virtualised network.

According to some embodiments the attribute is configured to be usable by the virtualised component to prove one or more characteristics of the virtualised component.

According to some embodiments the apparatus is configured to configure the attribute to be valid only for a lifetime of the virtualised component.

According to some embodiments the apparatus is configured to invalidate the trust attribute in response to a termination of the virtualised component.

According to some embodiments, the attribute is configured to be non-transferable to another virtualised component.

According to some embodiments the apparatus is configured to securely assign the attribute to the virtualised network function using cryptographic means.

According to some embodiments, the cryptographic means comprises a digital signature.

According to some embodiments, the declared information comprises the trust attribute.

According to some embodiments, the virtualised component comprises a plurality of virtualised components, each instance of the plurality of virtualised components comprising a respective unique trust attribute.

According to some embodiments the attribute is generated by a security management entity.

According to some embodiments the security management entity is external to the virtualised network.

According to some embodiments the security management entity acts as an intermediary between the virtualised component and a public key infrastructure.

According to some embodiments the security management entity comprises a security orchestrator (SecO).

According to some embodiments the apparatus comprises the security management entity.

According to some embodiments the virtualized component comprises a virtualization network function component (VNFC).

In an eighth aspect there is provided an apparatus comprising at least one processor; and at least one memory including computer program code; the at least one memory and the computer program code configured to, with the at least one processor, cause the apparatus at least to: receive an attribute to be assigned to the apparatus, the apparatus comprising a virtualised component in a virtualised environment; wherein the attribute is unique to the apparatus, and wherein the attribute comprises a trust attribute.

According to some embodiments, the trust attribute comprises a plurality of trust attributes.

According to some embodiments, at least one property of the trust attribute is configured to be dependent on at least one property of the apparatus.

According to some embodiments, the apparatus is configured to receive the attribute during an instantiation process of the apparatus.

According to some embodiments, the instantiation comprises generation of a key-pair for the apparatus.

According to some embodiments the key-pair comprises a trusted public key contained in an instance declaration of the virtualised component and signed by an external security management entity.

According to some embodiments the apparatus is configured to inject the key-pair in to the virtualised component.

According to some embodiments the key-pair comprises a private key generated by the apparatus.

According to some embodiments, the instantiation comprises a first key-pair for security management, and a second key pair for use at a communication level.

According to some embodiments, the trust attribute comprises the key-pair.

According to some embodiments, the key-pair is configured to be trusted by an external public key infrastructure.

According to some embodiments, the apparatus is configured to use the attribute for identification of the apparatus in the virtualised environment.

According to some embodiments, the apparatus is configured to use the attribute for authorization of the apparatus in the virtualised environment.

According to some embodiments, the apparatus is configured to use the attribute to prove one or more characteristics of the apparatus.

According to some embodiments, the attribute is configured to be valid only for a lifetime of the virtualised component.

According to some embodiments the trust attribute is configured to be invalidated in response to a termination of the virtualised component.

According to some embodiments, the attribute is configured to be non-transferable to another virtualised component.

According to some embodiments, the attribute is securely assigned to the apparatus using cryptographic means.

According to some embodiments, the cryptographic means comprises a digital signature.

According to some embodiments, the apparatus is configured to declare information at a time of instantiation of the apparatus.

According to some embodiments, the apparatus is configured to declare information at a time after instantiation of the apparatus.

According to some embodiments, the declared information comprises the trust attribute.

According to some embodiments, the declared information comprises information of a property of the apparatus.

According to some embodiments, the declared information is declared by the apparatus, and a second apparatus uses the declared information to evaluate the first apparatus.

According to some embodiments, evaluating the first apparatus comprises authentication of the first apparatus.

According to some embodiments, the authentication of the first apparatus comprises obtaining proof that the first apparatus possesses a valid private key.

According to some embodiments, evaluating the first apparatus comprises checking an authorization of the first apparatus.

According to some embodiments, the apparatus comprises a plurality of apparatus, each instance of the plurality of apparatus comprising a respective unique trust attribute.

According to some embodiments, the attribute is generated by a security management entity.

According to some embodiments, the security management entity is external to the virtualised network.

According to some embodiments, the security management entity acts as an intermediary between the apparatus and a public key infrastructure.

According to some embodiments, the security management entity comprises a security orchestrator (SecO).

According to some embodiments, the apparatus comprises a virtualization network function component (VNFC).

In a ninth aspect there is provided an apparatus comprising: means for generating an attribute for a virtualised component in a virtualised environment, the attribute being generated so as to be unique to the virtualised component; means for assigning the attribute to the virtualised component; the attribute comprising a trust attribute.

According to some embodiments the apparatus is configured to generate the attribute during an instantiation process of the virtualised component.

According to some embodiments the apparatus comprises means for generating a key-pair for the virtualised component for the instantiation.

According to some embodiments the key-pair comprises a trusted public key contained in an instance declaration of the virtualised component and signed by an external security management entity.

According to some embodiments the apparatus comprises means for causing the key-pair to be injected in to the virtualised component.

According to some embodiments the key-pair comprises a private key generated in the virtualised component.

According to some embodiments, the instantiation comprises a first key-pair for security management, and a second key pair for use at a communication level.

According to some embodiments the trust attribute comprises the key-pair.

According to some embodiments, the key-pair is configured to be trusted by an external public key infrastructure.

According to some embodiments the attribute is configured to be usable by the virtualised component for identification thereof in the virtualised network.

According to some embodiments the attribute is configured to be usable by the virtualised component for authorization thereof in the virtualised network.

According to some embodiments the attribute is configured to be usable by the virtualised component to prove one or more characteristics of the virtualised component.

According to some embodiments the apparatus comprises means for configuring the attribute to be valid only for a lifetime of the virtualised component.

According to some embodiments the apparatus comprises means for invalidating the trust attribute in response to a termination of the virtualised component.

According to some embodiments, the attribute is configured to be non-transferable to another virtualised component.

According to some embodiments the apparatus comprises means for securely assigning the attribute to the virtualised network function using cryptographic means.

According to some embodiments, the cryptographic means comprises a digital signature.

According to some embodiments, the declared information comprises the trust attribute.

According to some embodiments, the virtualised component comprises a plurality of virtualised components, each instance of the plurality of virtualised components comprising a respective unique trust attribute.

According to some embodiments the attribute is generated by a security management entity.

According to some embodiments the security management entity is external to the virtualised network.

According to some embodiments the security management entity acts as an intermediary between the virtualised component and a public key infrastructure.

According to some embodiments the security management entity comprises a security orchestrator (SecO).

According to some embodiments the apparatus comprises the security management entity.

According to some embodiments the virtualized component comprises a virtualization network function component (VNFC).

In a tenth aspect there is provided an apparatus comprising means for receiving an attribute to be assigned to the apparatus, the apparatus comprising a virtualised component in a virtualised environment; wherein the attribute is unique to the apparatus, and wherein the attribute comprises a trust attribute.

According to some embodiments, the trust attribute comprises a plurality of trust attributes.

According to some embodiments, at least one property of the trust attribute is configured to be dependent on at least one property of the apparatus.

According to some embodiments, the apparatus comprises means for receiving the attribute during an instantiation process of the apparatus.

According to some embodiments, the instantiation comprises generation of a key-pair for the apparatus.

According to some embodiments the key-pair comprises a trusted public key contained in an instance declaration of the virtualised component and signed by an external security management entity.

According to some embodiments the apparatus comprises means for injecting the key-pair in to the virtualised component.

According to some embodiments the key-pair comprises a private key generated by the apparatus.

According to some embodiments, the instantiation comprises a first key-pair for security management, and a second key pair for use at a communication level.

According to some embodiments, the trust attribute comprises the key-pair.

According to some embodiments, the key-pair is configured to be trusted by an external public key infrastructure.

According to some embodiments, the apparatus comprises means for using the attribute for identification of the apparatus in the virtualised environment.

According to some embodiments, the apparatus comprises means for using the attribute for authorization of the apparatus in the virtualised environment.

According to some embodiments, the apparatus comprises means for using the attribute to prove one or more characteristics of the apparatus.

According to some embodiments, the attribute is configured to be valid only for a lifetime of the virtualised component.

According to some embodiments the trust attribute is configured to be invalidated in response to a termination of the virtualised component.

According to some embodiments, the attribute is configured to be non-transferable to another virtualised component.

According to some embodiments, the attribute is securely assigned to the apparatus using cryptographic means.

According to some embodiments, the cryptographic means comprises a digital signature.

According to some embodiments, the apparatus comprises means for declaring information at a time of instantiation of the apparatus.

According to some embodiments, the apparatus comprises means for declaring information at a time after instantiation of the apparatus.

According to some embodiments, the declared information comprises the trust attribute.

According to some embodiments, the declared information comprises information of a property of the apparatus.

According to some embodiments, the declared information is declared by the apparatus, and a second apparatus uses the declared information to evaluate the first apparatus.

According to some embodiments, evaluating the first apparatus comprises authentication of the first apparatus.

According to some embodiments, the authentication of the first apparatus comprises obtaining proof that the first apparatus possesses a valid private key.

According to some embodiments, evaluating the first apparatus comprises checking an authorization of the first apparatus.

According to some embodiments, the apparatus comprises a plurality of apparatus, each instance of the plurality of apparatus comprising a respective unique trust attribute.

According to some embodiments, the attribute is generated by a security management entity.

According to some embodiments, the security management entity is external to the virtualised network.

According to some embodiments, the security management entity acts as an intermediary between the apparatus and a public key infrastructure.

According to some embodiments, the security management entity comprises a security orchestrator (SecO).

According to some embodiments, the apparatus comprises a virtualization network function component (VNFC).

### BRIEF DESCRIPTION OF FIGURES

Figure 1 illustrates the ETSI NFV reference architectural framework;
Figure 2 is an example scenario providing context to the present invention;
Figure 3 is a signaling diagram showing a use case according to an embodiment;
Figure 4 is a signaling diagram showing a use case according to an embodiment;
Figure 5 is a signaling diagram showing a use case according to an embodiment;
Figure 6 is a signaling diagram showing a use case according to an embodiment;
Figure 7 is a signaling diagram showing a use case according to an embodiment;
Figure 8 is a signaling diagram showing a use case according to an embodiment;
Figure 9 is a signaling diagram showing a use case according to an embodiment;
Figure 10 is a signaling diagram showing a use case according to an embodiment;
Figure 11 is a schematic overview of a system according to an embodiment;
Figure 12 is a schematic overview of a system according to an embodiment;
Figure 13 is a schematic overview of a system according to an embodiment;
Figure 14 is a flowchart of a method according to an embodiment;
Figure 15 is a flowchart of a method according to an embodiment.

### DETAILED DESCRIPTION

In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

In traditional Telco Networks network elements (NE) are typically realized as individual entities running on dedicated servers or even in function-specific hardware (HW) boxes. That is each NE may comprise one or more physical elements. By nature such a setup is relatively rigid and stable (from a topological and implementation point of view), and security foundations as well as security relations between those entities, once configured, remain valid over a long time.

Often security and trust mechanisms are implemented in a delimited software/hardware (SW/HW) environment or even completely encapsulated in HW. Therefore the security and trust mechanisms may be relatively inaccessible due to physical protection e.g. relying on secure implementation as an embedded system, uniquely associated with HW IDs (such as HW serial numbers), with HW or firmware (FW) based roots of trust, etc. Therefore the isolation between those NEs is guaranteed by strong implementation mechanisms, physical boundaries and persistently (or even immutably) identifiable entities. In most cases the relations between those entities, as well as their physical location, topology, configuration, and functionality is determined during enrolment/deployment and by installation processes, and will not change very rapidly. In many cases security relations between individual entities rely on pre-configured key material, which is well protected and is used over months or even years.

In telco clouds the situation is different, at least in part due to the 'mobile' and dynamic (and not fully physically protected) nature of virtualized network functions (VNF), supported and accelerated by automated lifecycle management, as, for example, defined with ETSI NVF based telco cloud environments. Typically, VNFs can be (re-)instantiated from a "base image" in a matter of minutes and can be quickly moved or migrated to other virtualization platforms, suspended, or terminated as needed by flexible NW services. Moreover, ETSI NVF allows composing VNF from several VNF components (VNFC), which may come from the same vendor (or possibly also from trusted third parties, such as a subcontractor). Patch states and release may be different among VNFs of the same type. In contrast to conventional NEs, the identity of a VNF or VNFC is variable, and should only exist (and be valid) during a life-time of an individual VNF instance. In addition, functional capacities can be expanded or shrunk by similar (but not identical) VNF instances, for example when new or higher performance VNFs are sequentially launched or existing ones are terminated in a scaling process. Thus, network entities, their number as well as their configuration are more changeable in virtualized networks and neither "location" nor integrity values (such as signals or hashes) nor IDs bound to the base image are sufficient to identify individual instances. Furthermore security problems come with illegal instantiations (e.g. exceeding licence agreements) and with snapshots, which may act as a clone (potentially with a same ID/key) of a VNF instance, possibly being in an obsolete condition (like an older release or inadequate patch level). A (VM/VNF) snapshot may be considered a copy of the virtual machine's disk file at a given point in time. In particular, snapshots can contain secrets, which have been given to an instance or have been created therein.

For a VNF (and even the underlying VNF management) it is much harder to reliably keep control over the identities and security characteristics of such instances/clones in their neighbourhood because security relevant properties cannot implicitly be assumed when authenticating an ID. In particular, malicious usage cannot be reliably excluded (e.g., a licenced VNF is illegally copied in order to exceed granted licence limits, or a malicious VNFC is inserted in order to eavesdrop or steal secret data from within a supposedly trusted VNF compound, or a VNF is moved to an unreliable / unsecure platform where it can be attacked significantly more easily).

Consequently the present inventors have identified that there may be a need to provide reliable mechanisms for the (run-time) identification and authorization of VNF/VNFC instances. This may be together with assigned characteristics (including integrity) and for proofing their authorization for a specific purpose in a defined environmental context (e.g., trusted platform or geo-location, compliance to a given security policy, originating from trusted vendor, affiliation to a network service etc.). Moreover, when it comes to key material and credentials (certificates), there may be a need to provide an equivalence to a unique lifetime characteristic (like a HW/SW ID or "serial-number", which in traditional networks has often been used to uniquely assign a key pair/certificates/ license to an individual NE).

As explained above, traditional telecommunication networks widely rely on trust mechanisms based on implementation, as well as the physical uniqueness and seclusion (associated with a key and/or serial number) and integrity of an entity (i.e., protected HW/FW cannot be modified, copied, moved or multiplied in a matter of minutes, and HW shielded secrets cannot easily get extracted, etc.).

Furthermore, mechanisms are known to prove the static integrity of SW/FW, e.g., by means of signal verification or by attestation mechanisms as proposed by the TCG (Trusted Computing Group).

Further, security/trust mechanisms are known. For instance, in a RBAC system the user/machine ID is associated with roles, which decide on the permissions an authenticated user/machine may have. Similarly, in an XACML based system, an identified ID determines which policies must be enforced, in case such ID uploads a request to a service. In virtualized environments secrets may be assigned to VNF instances and any further 'trust' and security relations rely on such key material. Such traditional schemes are also applied in ETSI NVF, where security of platforms and Hypervisors (HV) is assured (e.g., by trusted boot of HV or even integrity verification of VNF *images* at launch time), but the security relations between virtualized entities are in principle taken over from the traditional telecommunication networks.

Trust and identity requirements and solutions are introduced in ETSI NFV SEC, e.g., SEC002, 003 and 005. However, such type of identification is user-centric (not VNF/instance specific) and also static, neither considering, for example, environmental parameters, nor initial nor dynamically changed attributes of VNF/VNFC instances when scaled, moved, migrated, terminated, etc. Also applying these to the purpose of status/trust-dependent authorization is not discussed therein.

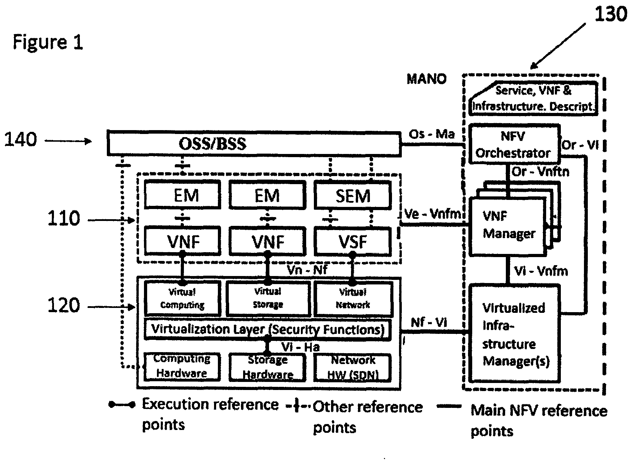

Figure. 1 illustrates the ETSI NFV reference architectural framework. As shown in Figure 1, the architectural framework comprises three main working domains, namely a Virtualized Network Function (VFN) domain 110, Network Functions Virtualization (NFV) infrastructure (NFVI) domain 120, and NFV Management and Orchestration domain 130. The architectural framework also comprises an OSS (Operation Support System) /BSS (Business Support System) 140 of an operator of virtualized networks.

The VNF domain 110 comprises one or more virtualized network functions (VNFs), each of which may be considered to comprise a virtualization of a network function. For example the function could be a GSM function or MME, gateway, firewall, HSS, or indeed any virtualizable function from core or access networks. The VNF could also be part of a modern/current/future network such as a 5G context. A VNF can be composed of multiple internal components. For example, one VNF can be deployed over multiple Virtual Machines (e.g. VNFCs), where each VM hosts a single component of the VNF. However, in other cases, the whole VNF can be deployed in a single VM as well. A VNF may be implemented as a software implementation (such as a software-only entity, or a SW part of a HW/SW function) of a network function, which is capable of running over the NFVI. Partly networked layers can be virtualized, too. In the VNF domain 110, an Element Management System (EMS) may be deployed to perform typical management functionalities for one or several VNFs.

The NFVI 120 comprises the hardware and software components that build up the environment in which VNFs are deployed, managed and executed. The NFVI can span across several locations, i.e. places where NFV Infrastructure-Point of Presence are operated. The network providing connectivity between these locations is regarded to be part of the NFVI 120. From a VNF's perspective, the virtualization layer and the hardware resources may look like a single entity providing them with desired virtualized resources. NFVI supports the execution of the VNFs with the diversity of physical resources which are virtualized.

In the NFVI domain 120, the physical hardware resources include computing, storage and networking that provide processing, storage and connectivity to VNFs through the virtualization layer (e.g. hypervisor). The computing hardware may be assumed to be COTS (Commercial-Off-The-Shelf) as opposed to purpose-built hardware. Storage resources can be differentiated between shared network attached storage (NAS) and storage that resides on the server itself. Computing and storage resources are commonly pooled. Network resources are comprised of switching functions, e.g. routers, and wired or wireless links. Also, network resources can span different domains.

The virtualization layer abstracts, or separates, the hardware resources and decouples the VNF software from the underlying hardware, thus ensuring a hardware independent lifecycle for the VNFs. The virtualization layer may therefore be considered to be responsible for: Abstracting and logically partitioning physical resources, commonly as a hardware abstraction layer; enabling the software that implements the VNF to use the underlying virtualized infrastructure; providing virtualized resources to the VNF, so that the latter can be executed. The virtualization layer in the middle ensures VNFs are decoupled from hardware resources and therefore, the software can be deployed on different physical hardware resources. Typically, this type of functionality is provided for computing and storage resources in the form of hypervisors and virtual machines (VMs). A VNF may be deployed in one or several VMs.

The NFV Management and Orchestration 130 covers the orchestration and lifecycle management of physical and/or software resources that support the infrastructure virtualization, and lifecycle management of VNFs. It may focus on all virtualization specific management tasks necessary in virtualized networks. From an NFV's point of view, virtualized infrastructure management comprises the functionalities that are used to control and manage the interaction of a VNF with computing, storage and network resources under its authority, as well as their virtualization. The virtualized infrastructure orchestration comprises the orchestration and management of NFV infrastructure and software resources, and realizing network services on NFVI.

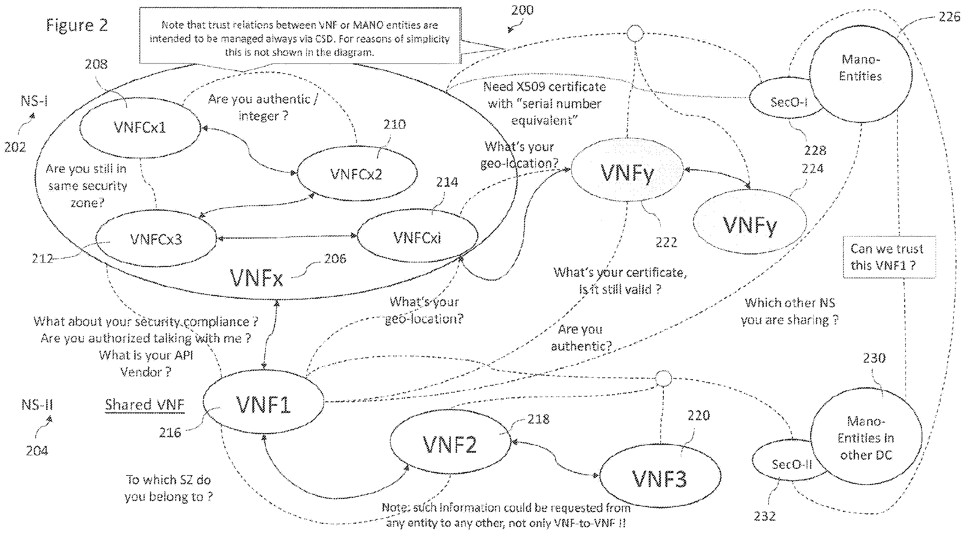

Figure 2 is an example scenario which helps to provide context to the present invention. In Figure 2 a virtualised network is shown generally at 200. A first Network Service (NS-I) is shown generally at 202. A second Network Service (NS-II) is shown generally at 204. A first virtual network function instance VNFx is shown at 206. VNFx 206 itself comprises further VNF instances 208, 210, 212 and 214. Further VNFs are shown at 216, 218, 220, 222 and 224. A first MANO (Management and Orchestration) entity is shown at 226. The first MANO entity 226 is associated with cloud security director 228. A second MANO entity in another DC (data centre) is shown as 230. MANO entity 230 is associated with security orchestrator (SecO) 232. Figure 2 illustrates the kind of information that various functions and/or entities may require from each other. For example VNF1 216 is in communication with VNF 206 and requires information such as: "what about your security compliance? Are you authorised talking with me? What is your API or vendor?" This may be relevant for VNFC, which usually would stem from same vendor or TTP. VNF1 216 is also in communication with VNFy 222, and they are communicating questions such as: "what is your certificate, is it still valid?" The MANO entities 226 and 230 can also communicate with each other. For example in Figure 2 the MANO entities 226 and 230 are communicating to decide whether the VNF1 216 can be trusted. Note that in some embodiments trust relationships between VNFs and/or MANO entities may always be managed via a SecO.

Other questions which the entities may require answers to are clearly shown in Figure 2 and are not repeated here for conciseness. Nevertheless it will be understood that entities in virtualised networks require a level of trust that an entity or instance which they are communicating with is authentic e.g. is the entity or instance which they intend to communicate with or believe that they are communicating with.

Accordingly examples described herein disclose mechanisms for Virtualized Network Functions (VNF) instances in virtualized telco environments. According to the examples, when a Virtualized Network Functions instance (VNFI) is created from a VNF image the VNFI is associated with a new cryptographically secured Instance Declaration (IDc). A VNF "image" may be considered to be a basic framework of VNF information from which a VNF instance can be created. The IDc comprises a unique ID, credentials such as public keys and certificates, authorization attributes and may comprise static or dynamic trust capabilities. An Initial Instance Declaration (IIDc) may be considered a static IDc. The IIDc may be distinguished from a Dynamic Instance Declaration (DIDc). A DIDc may be considered to comprise an IIDc and a set of trust attributes of a VNF that may change after instantiation. The DIDc may comprise a full history of changes to the DIDc. Accordingly an IIDc or subset or attributes thereof such as hash may provide a life-time "serial number" of a VNFI. An IIDc may also contain a reference to the VNFI (HW platform) or HV it is running on. Nevertheless, primarily the ID is to identify the virtual instance and all parameters associated with it. The IIDc allows a VNFI to be uniquely identified for example towards a telco operator Public Key Infrastructure (PKI). Embodiments allow unique identification and management of trust and authorization of each VNFC during its life-time that may involve copying, snapshots, migration or moving, re-instantiation and scaling of the VNFC. Accordingly some embodiments may provide secure binding of unique ID & trust attributes to VNF instances and capabilities for dynamic trust management.

Some embodiments introduce a new mechanism for declaring the static, initial and changeable attributes of an NFV entity in a dynamic ecosystem. In embodiments the one or more attributes can be uniquely associated with the NFV object in question. Additionally, the one or more attributes may identify the NFV object. Furthermore, a secure entity may centrally maintain and validate the identity or identities of respective NFV objects (together with trust attributes) in a whole NFV system across multiple virtual infrastructures. Particularly, authorization, especially dynamic permission granting for adapting the dynamicity and distribution character of the NFV (i.e., Telco Cloud) context, is considered in this application.

Currently there are no specific trust mechanisms known that are adequately adapted to virtualization environments, supporting trustworthy life-time identification and authorization of a personalized VNF, such as unique and cryptographically confirmed trust properties of a running instance. In embodiments, trust properties are securely assigned to each individual VNF instance and are not pre-configured/configurable in or transferable to another entity/VNF. Reliable mechanisms allow proving of an instance's characteristics and authorization in a secure manner. Furthermore, mechanisms are provided which ensure invalidation of such characteristics as soon as the lifetime of an instance has ended. Therefore embodiments take into account that characteristics of an entity (e.g. a virtual component or entity such as a VNF) may change during lifetime of an instance. Furthermore, embodiments enable such information to be updated dynamically and used at any time and in a secure way.

Embodiments introduce trust attributes for VNF instances. More particularly embodiments introduce trust attributes of a VNFC constituting a VNF. Furthermore, embodiments describe how these trust attributes can be one or more of: declared; assigned; used; and managed in a secure way. Embodiments also describe how trust relationships (and thus, authorization for a specific task) between VNFs (or other ETSI-VNF entities) can be verified and established, relying on such attributes.

In embodiments, such trust attributes are configured to be valid only during the lifetime of an instance. Therefore, in embodiments a trust attribute is invalidated after a lifetime of an instance (implicitly or explicitly). In the context of this invention these trust attributes are also called 'Instance Declaration Attributes', as they declare properties of an individual instantiated VNF image. More generally, they could be used also in a conventional virtualization context for VMs (virtual machines) in IT world, not directly aligned with ETSI NFV, telco clouds, and security orchestration).

Public keys and PKI-certificates may refer or belong to such trust attributes. Also, values related to authenticity (for example origin, static integrity) of a VNF (respectively, of the underlying image and its initially intended scope of operation) may be provided. Also, values describing the run-time integrity status and history of an instance may be provided. The integrity status may be requested by a specific entity, such as attestation server of even hypervisor, depending on how integrity is measured. In some cases, the SecO may have suitable capabilities. In a typical case SecO gathers integrity values from other, trusted entities.

A history of an instance may be contained in the (sequence of) DIDc data itself. For example, when generating a new DIDc, the DIDc data keeps all former content (attributes), and just appends newer/changed attributes. Afterwards the DIDc is signed by SecO. Some history could also be retrieved from an external entity, if such data is maintained. By way of example, a hypervisor might know if an instance has been moved/migrated, terminated, suspended and when.

Furthermore, such attributes (i.e. trust attributes) may refer to other VNF instances, e.g. in the case of a VNF constituted from several VNFCs (VNF components), or VNF commonly constituting a network service.

A collection of trust attributes is herein referred to as an 'Instance Declaration'. An instance declaration may be uniquely assigned to each individual instance (e.g. VNF). More specifically, an Instance Declaration may be securely bound to an instance. In some embodiments an Instance Declaration is securely bound to an instance by use of cryptographic means. In some embodiments the cryptographic means comprises a digital signature).

In embodiments there are different types of declaration. For example there may be initial declarations which may differ from dynamic declarations. Therefore a distinction may be made between Initial (static) Instance Declarations (IIDc) and Dynamic Instance Declarations (DIDc). In embodiments the IIDc is created at instantiation and registration time of an instance. In embodiments a DIDc describes the trust attributes of a VNF after instantiation, at a defined time of certification (issuance) or confirmation. In some embodiments DIDc attributes may overwrite IIDc attributes. Alternatively DIDc attributes may be added to existing IIDc attributes, so that the history in a sequence of IIDc,..DIDcₒ, DIDc₁, ... DIDcₙ remains visible. This may depend on implementation requirements.

IIDc individual attributes of an instance may be considered equivalent to a lifetime serial number of an instance. In more detail, IIDc attributes (or a subset thereof or a 'hash' of a IIDc) may be used as equivalent to an instance's 'life-time serial number' in a PKI based certificate issuing process. Therefore in some embodiments the IIDc attributes may be considered equivalent to a hardware serial number of a network element.

Trusted entities responsible for security management and orchestration for VNF / virtualized network services (in particular, entities known as SecO), may act as signing authorities for IIDc/DIDc security lifecycle management. Preferably, such entities are designed to, and do operate in a centralized or hierarchical manner.

Similarly, such trusted entities (for example a security management entity such as SecO) may act as RA (Registration authority) towards a provider PKI in a certificate issuing process. Likewise the security management entity (e.g. SecO) may also act as invalidator of issued certificates, or may send invalidation triggers to a PKI. In such an instance the PKI may have to create certificate revocation list (CRL), depending on the implementation.

Privacy rules may be applied for IIDc/DIDc. For example a VNF can decide which attributes should be visible per IIDc / DIDc Therefore there may be considered to be IIDc^{∗} / DIDc^{∗} where ^{∗} denotes that specific attributes can be masked out in a re-signed, filtered IIDc / DIDc. Accordingly several (different) IIDc^{∗} / DIDc^{∗} can exist (derived from a unique IIDc).

Trust and security relationships can be incorporated in the described IIDc/DIDc mechanisms. Likewise authorization/authentication processes can be built on the IIDc/DIDc mechanisms. The trust/security and authorization/authentication features are applicable between VNF and/or MANO-entities located in same or even in different data-centres, as explained below.

Generally, the IIDc / DIDc data (i.e., individual attributes thereof) can serve as an accredited source of identification for a virtual instance (e.g. VNFC). Also, the IIDc/DIDc data can act as information for trust and authorization information. In embodiments the information (e.g. identification/ trust/ authorization information) can be promptly re-confirmed or renewed during the lifetime of a (VNF or virtualized management) instance.

In an embodiment, and as an example of usage, in an authorization process the (policy, rule, or role) enforcing entity (here: VNFa) can trust the (verifiable and valid) IIDc/DIDc attributes presented by another VNF (VNFb in this example) after authentication. In embodiments authentication allows proof of possession of the private key, while the public part is contained in the IIDc/DIDc. Also a validity period of asymmetric key-pair or shared secret may be a parameter contained in IIDc/DIDc. Thus, in the given context, which is currently relevant to decide on authorization of VNFb for a specific request, need not be statically pre-configured or resolved (involving other entities like PIP (policy information point), but can be directly derived from the (trustworthy) set of attributes contained in the IIDc/DIDc of VNFb. So for example the geo-location or the security-compliance state of VNFa may determine whether access to a specific resource or data (hosted in VNFb) can be granted or not.

Thus, embodiments may provide mechanisms for novel authorization processes based on dynamic, trustworthy context information presented by an (virtualized) applicant itself and confirmed / signed by a trustworthy third party (e.g. SecO). More specifically, this may be used in RBAC (Role Based Access Control), rule or policy based (e.g., XACML, RSBAC, SeLINUX, etc.) authorization engines or processes, which can trust confirmed security properties (attributes) presented by an external ID together with a service request.

In a variant the SecO itself (i.e., signing authority for the IIDc/DIDc) could also serve as a (central) trusted on-line information point for authorization. In some embodiments the SecO/CSD may be directly contacted by an authorization engine for IIDc/DIDc related attributes. However, as mentioned above 'privacy rules' ought to be respected. For example a VNF may mark attributes as 'public', for which the SecO could provide (signed) information to third parties.

When used in a PKI context, certificates can implicitly bind IIDc/DIDc trust attributes to a key-pair. This may be combined with explicit (e.g. on-line confirmation by SecO) or implicit validation and invalidation (validity period) of key material. Since valid IIDc/DIDc only exist during lifetime of an instance, the (same) key material cannot be used by an attacker via a malicious instance, as the IIDc/DIDc of such instance would not match the unique instance IDs contained in an abused (e.g. incorrectly assigned) X.509 certificate.

Other "secrets" (i.e., non X.509 compliant) could in a similar way be bound to an IIDc/DIDc, but require a different handling. For instance, a shared secret or pure RSA key-pair could be bound to an IIDc/DIDc by use of a hashing algorithm.

The uniqueness of IIDc/DIDc attributes (e.g. being uniquely assigned to a VNF instance) can be exploited to the benefit of book-keeping, asset management, or monitoring processes. For instance clones / snapshots could be detected when running on other environments as claimed by an associated/presented IIDc/DIDc or having invalid attributes (if, for example, a snapshot or illegal clone becomes too old). For example instances with the same "unique" IIDc/DIDc attributes could be identified as illegal (cloned), when existing at the same time.

In some embodiments licence keys (e.g., signed files, describing VNF capabilities) can be securely assigned to identifiable (for example cryptographically verifiable) instances. Thus, both binding of licences to VNF as well as book-keeping of VNF (or any other virtual machine) is enabled in an ETSI NFV context.

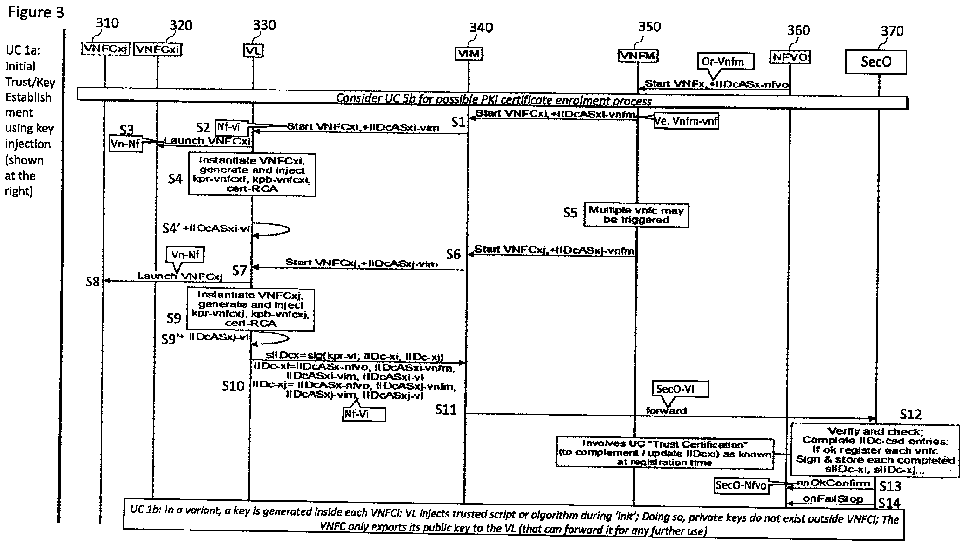

An example user case is shown in Figure 3. The use case of Figure 3 demonstrates initial trust/key establishment and registration. In this example the VNFs are initial instances i.e. are new instances (which may have been created from a base image) and have not been updated during their life cycles. Referring to Figure 3 a first VNF (VNFCxj) is shown at 310. A second VNF (VNFCxi) is shown at 320. A virtualisation layer (VL) is shown at 330. The virtualisation layer may comprise for example a hypervisor. The hypervisor may be a hypervisor of a host operating system. Also shown is virtual infrastructure manager (VIM) 340, VNF manager (VNFM) 350, NFV orchestrator (NFVO) 360, and security orchestrator (SecO) 370.

The method is initiated at step S1 with a message from the VNFM 350 to the VIM 340 instructing the process to be started. At step S2 this message is effectively forwarded from the VIM to VL 330. At step S3 a message is sent from the VL 330 to the VNF 320 to launch a process of initial trust/key establishment. At step S4 the VL 330 instantiates the VNF 320, and generates and injects a security certificate for the VNFCXi 320. Looking at step S4 in more detail, initially a RSA key-pair is 'injected', as is a root CA certificate (cert-RCA), which is not a certificate related to the injected key pair. The key pair may also be accompanied by a certificate, but this is not necessary in this step (can be done later). In some embodiments in later stages a VNFC may be equipped with two key pairs: one key pair for security management at the beginning, and the other key-pair (PKI related) later. Accordingly the Root CA certificate is an example of a trust anchor given to an instance at instantiation time. It enables a VNF to verify certificates of other VNF or NE against the operator PKI. Such cert_RCA would be the same for all VNFs managed by the same PKI.

As shown generally at step S5 multiple VNFs may be triggered. Therefore a process of instantiating and injecting a certificate into the VNFCxj 10 is shown at steps S6, S7, S8 and S9, which are respectively analogous to steps S1, S2, S3 and S4. After each VNF is instantiated by the VL 330, then a declaration (e.g. an instantiation declaration) is prepared for each VNF. For example at step S4' a declaration for VNF 320 is generated. At step S9' a declaration for VNF 310 is generated. These instantiation declarations may comprise information about the respective VNFs (e.g. information which may be required for communication with other VNFs and/or other entities).

At step S10 these declarations are forwarded from the VL 330 to the VIM 340. These declarations are then forwarded by the VIM 340 to the SecO 370 at step S11. At step S12 the SecO 370 carries out a verification and checking step. This may involve "trust certification", which may require communication with the VNF Manager (VNFM) 350. If the verification is passed, then the SecO 370 registers each VNFC and stores their declaration in memory. If all is okay then an "OK" message is sent to NFVO 360 as shown at step S13. If on the other hand there has been a failure for some reason, then a "fail stop" message is sent from SecO 370 to NFVO 360 at step S14.

In a variant of the method of Figure 3, a key pair is generated inside each VNFC (e.g. VNFCs 310 and 320). In this case the VL 330 may inject a trusted script or an algorithm during the "init" step (i.e. the initiation step). In doing so, private keys do not exist outside the VNFCs. The VNFC only exports its public key to the VL. The VL can forward it for any further use.

Considering Figure 3 more generally, there may be considered three stages or layers. First, there is the (initial) key binding and registration. At this stage, during network service (NS) deployment for each instance, specific Trust Attributes are generated and signed by involved MANO entities. The second stage involves the virtualization layer (VLayer). The VLayer injects key-pair and Root CA certificates and signs resulting Instance Declarations (IIDc) composed from signed Trust Attributes. The third stage involves the SecO. The SecO verifies, completes and re-signs unique IIDc for registration. Optionally, PKI credentials are issued and bound to each VNF instance (and IIDc/DIDc).

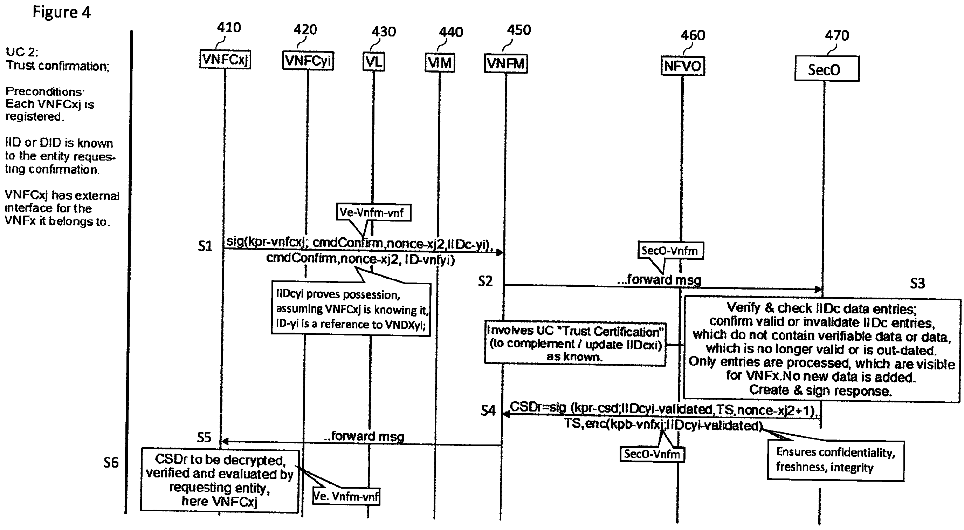

Figure 4 shows a second use case. In this use case there is "dynamic confirmation" (IDC) of a VNF. This may enable, for example, information of a VNF to be updated after instantiation. There are some existing assumptions in Figure 4. For example there is a precondition that each VNF 410 and 420 is already registered, and the instantiation declaration (IID or DID -is known to the entity requesting confirmation. There is also an assumption that a VNF component (e.g. VNFCxj 410) has external interface for the VNFx it belongs to. The IIDc (Initial Instance Declaration) contains mainly static information. The DIDc (Dynamic Instance Declaration) contains lifetime modifications in addition to the IIDc.

At step S1 protected data like signed ("sig") information is sent from VNF 10 to VNFM 450. In some embodiments the "sig" is a mathematical crypto-signature function. For example Sig(k; msg) means: sign message mgs using the private key k; more precisely: msg is hashed (using a hash function not further specified here) and the result then is encrypted using k and a signature function (may be RSA or DSA, etc. - not specified here). Therefore this message contains, for example, a trust attribute (e.g. certificate) proving that the VNF 410 is the VNF it claims to be. At step S2 this message is forwarded from VNFM 450 to SecO 470. At step S3 the SecO 470 verifies and checks the received message. This may "confirm valid or invalidate IIDC entry" (i.e. validates the VNFs declaration). Only entries are processed which are visible for VNFx. No new data is added. Step S3 may involve "trust certification" with the VNFM 450. At step S3 if the verification is passed then a response is created and signed. At step S4 the SecO signal is sent from SecO 470 to VNFM 450. This message is then forwarded at step S5 from VNFM 450 to VNF 410. At the VNF 410, the SecO is decrypted, verified and evaluated by the requested entity, in this case VNF 410, as shown at step S6. Therefore at a more general level a VNF may send a IIDc to the SecO, where the SecO checks all entries and marks those which are not valid anymore. The answer is signed and sent back. For example, the location of a VNF may have changed (migrated to another platform) or it has been suspended and is not active any more. Patch level (in case of runtime patches) or key material may have been changed etc. As this is only 'confirmation', no changes are made and just valid/not valid flags are provided at parameter/attribute level. A presumption is that the SecO can retrieve current values for all parameters from a database or from other MANO entities.

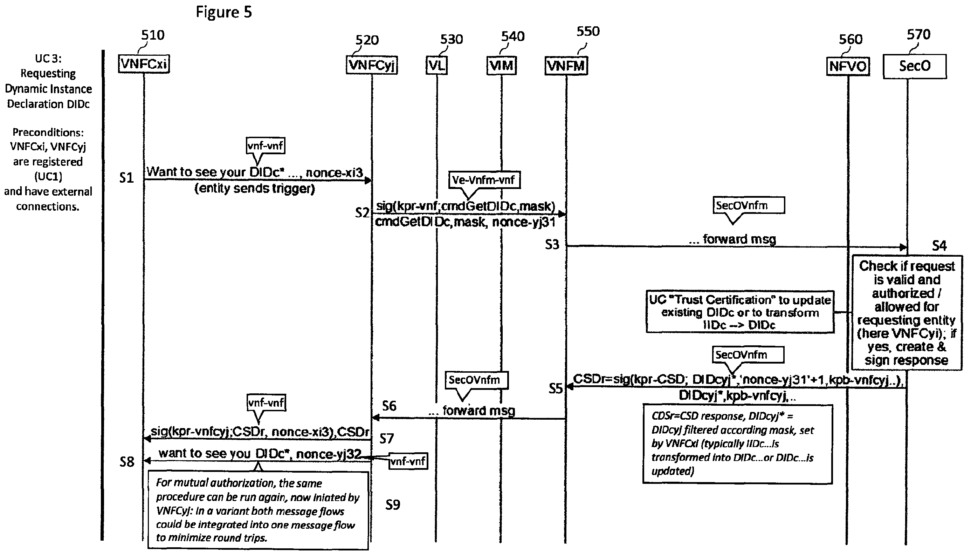

Figure 5 presents a further use case. In this use case a first VNF requests information from a second VNF. More particularly a first VNF requests a dynamic instance declaration of a second VNF. A precondition of the example of Figure 5 is that the first VNF 510 (VNFCxi) and the second VNF 520 (VNFCyj) are registered (e.g. the use case of Figure 3 has already been carried out), and have external connections. A DIDc reflects attributes that may include changes during the lifetime of an instance. Note, however, that not all attributes will be changeable, for instance the 'vendor' or hash of static VNF image will be immutable. However, location or integrity values/patch level or PKI related key material may change.

At step S1 VNF 510 sends a request "want to see your DIDC" to VNF 520. In other words the first VNF 510 sends a trigger to the second VNF 520. At step S2 the VNFCyj 520 begins a process of authenticating itself. This involves at step S2 sending a signal to VNFM 550. At step S3 this message is forwarded from VNFM 550 to SecO 570. At step S4 the SecO 570 checks if the request is valid and authorised or allowed for the request against it (in this case VNFCyj 520). If yes, then the SecO 570 creates and signs a response. At step S5 the response is sent to VNFM 550. Then, at step S6 the response is forwarded by VNFM 550 to VNFCyj 520. Following this authentication the VNFCyj 520 can now communicate with VNFCxi 510. As shown at step S7 the VNFCyj 520 sends a signal to VNFCxi 510. At step S8 it also sends a request "want to see your DIDC" message to VNFCxi 510. In other words the VNFCyj 520 requests VNFCxi 510 to go through the same authentication procedure. VNFCxi 510 can then go through the same authentication procedure, shown generally at step S9.

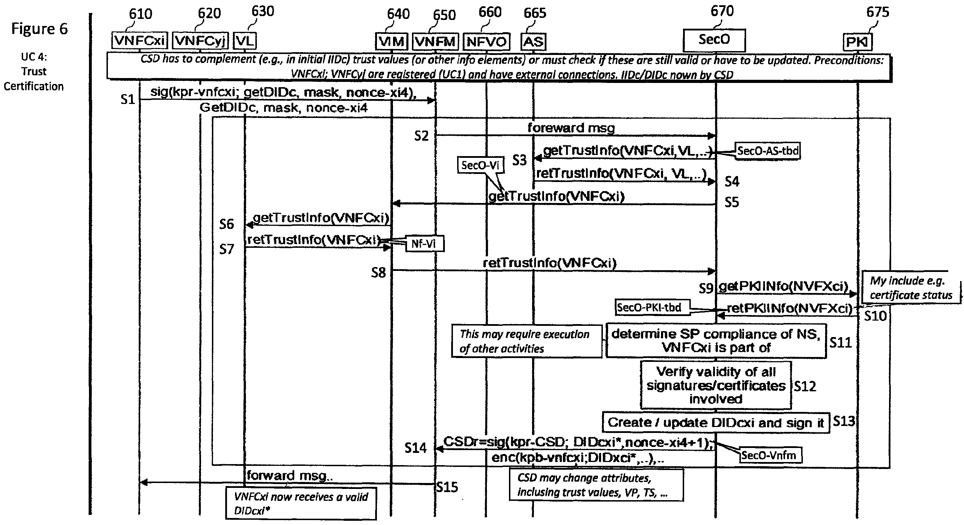

Figure 6 shows a further use case. More particularly Figure 6 shows trust certification. Figure 6 introduces two further entities, namely attestation service (AS) 665 and public key infrastructure (PKI) 675. In this embodiment the SecO has to complement (e.g., in an initial IIDC) trust values (or other info elements) or must check if these are still valid or have to be updated. Preconditions in Figure 6 are VNFC 610 and VNFC 620 are registered (e.g. as per Figure 3) and have external connections. Therefore IIDC/DIDC are known by the SecO.

At step S1 a signal is sent from VNFCxi 610 to VNFM 650. This includes a request for a DIDC (dynamic instance declaration). At step S2 the message is forwarded from VNFM 650 to SecO 670. Then there is communication between SecO 670 and AS 665. This is shown first at step S3 where SecO 677 sends a "get trust info" message to AS 665. In other words SecO 670 is checking with AS 665 whether VNFC 610 can be trusted. At step S4 the AS 665 sends, or returns, trust info to the SecO 670. Then, at step S5 the SecO 670 sends a "get trust info" message to VIM 640. This message includes information that it is requesting trust info VNFC 610. Then, at step S6 the VIM 640 forwards the "get trust info" message to VL 630. In response, as shown at step S7, the VL 630 returns trust info for VNF 610 to VIM 640. Then, as shown at step S8 the VIM 640 can return the trust info to the SecO 670. SecO 670 then sends a "get PKI info request regarding VNF 610 to PKI 675. In other words the SecO 670 is requesting public key information for VNF 610. The PKI then, at step S10, returns public key info to SecO 670. This information may include a certificate status.

At step S11 the SecO determines security policy (SP) compliance of the network service (NS) which the VNFCxi 610 is part of. Note that this may require execution of other activities. Then, at step S12 a validity of all signals/certificates involved is verified. At step S13 the DIDcxi is created/updated and signed by the SecO 670. Then at step S14 a SecOr "sig" is sent from SecO 670 to VNFM 650. At step S15 the message is forwarded from VNFM 650 to VNFC 610. In other words VNFC 610 now receives a valid DIDCxi.

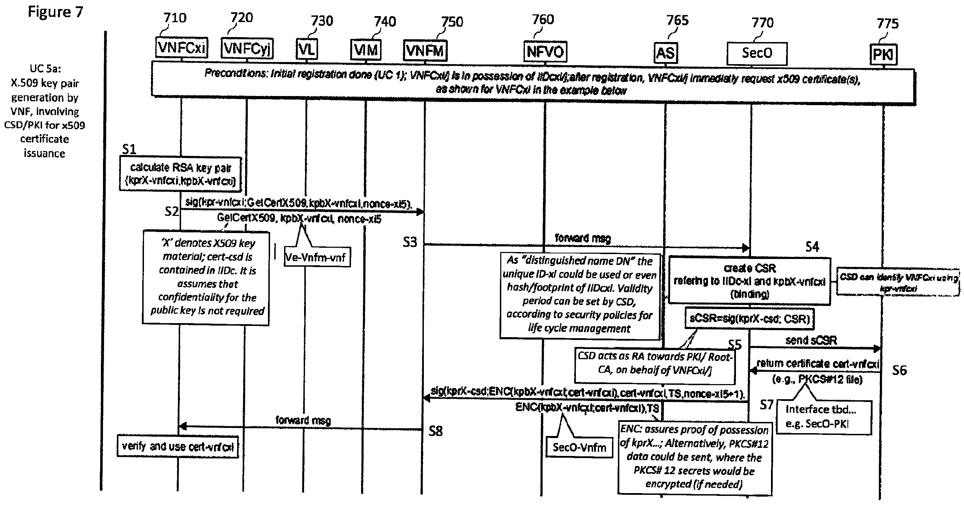

Figure 7 shows a further use case. In Figure 7 X.509 key and certificate generation is shown, involving the PKI. Pre-conditions in Figure 7 are initial registration done, for example as per Figure 3. Also, the VNFs 710 and 720 are in possession of initial declarations after registration, and the VNFs immediately request X.509 certificates. In this example it is shown that the VNFCxi 710 is requesting the X.509 certificates. At step S1 the VNFCxi 710 calculates an RSA key pair. It then sends a signal as shown at step S2 to VNFM 750. In this message "X" denotes X.509 key material and cert-SecO is contained in IIDC. In this example it is assumed that confidentiality for the public key is not required. At step S3 the VNFM 750 forwards the message to the SecO 770. Then at step S4 the SecO 770 creates a certificate signing request (CSR) referring to the instance declaration for VNF 710. A validity period can be set by the SecO, according to security policies for life-cycle management. In this example the SecO 770 is acting as a registration authority (RA) towards the PKI 775. At step S5 the SecO 770 sends a signed CSR (sCSR) to the PKI 775. Then, at step S6 the PKI 775 returns a certificate to the SecO 770. At step S7 the SecO 770 sends a signal to VNFM 750. At step S8 this message is forwarded to the VNFC 710. Then, the VNFCxi 710 can verify and use the received certificate.

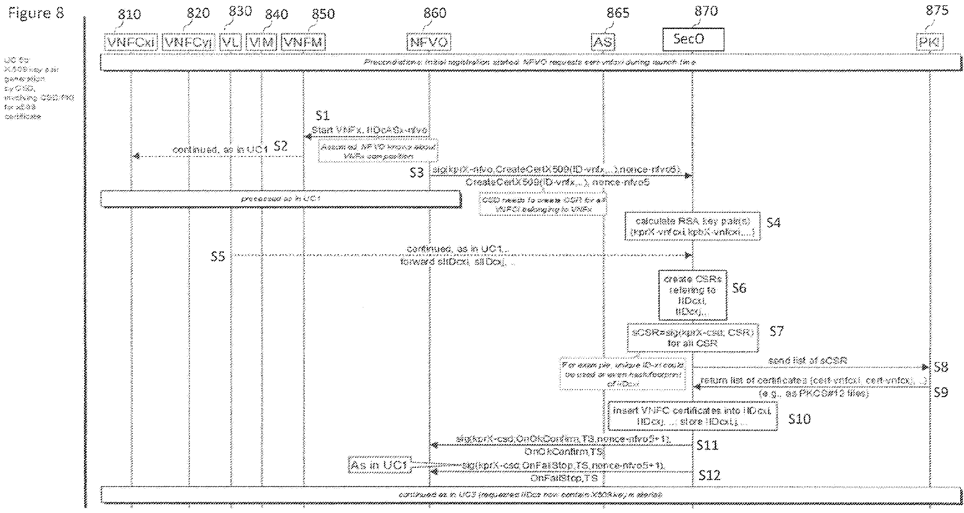

Figure 8 shows a further use case. Figure 8 also describes X.590 key and certificate generation involving PKI and a key pair (which is now generated outside the VNF/VNFC). In Figure 8 a precondition is that initial registration has started and NFVO 860 requests a certificate for VNFCxi 810 during launch time. At step S1 NFVO 860 starts the procedure by sending a "start VNFx" message to VNFM 850. It is assumed that NFVO 860 knows about VNFX composition. The process can then continue as per Figure 3, shown generally here as step S2. At step S3 a signal as shown is sent from NFVO 860 to SecO 870. The SecO needs to create CSR for all the NFCI belonging to VNFx. At step S4 the SecO 870 calculates RSA key pairs. As per Figure 3, at step S5 instance declarations are sent from the VL 830 to the SecO 870. Then, at step S6 the SecO 870 creates CSRs referring to the instance declarations for the VNFs involved. Then, at step S7 the SecO 870 generates SCSR signal for all CSRs. For example, unique ID-XI could be used or even hash/footprint of IIDCXI instance declaration. At step S8 the SecO 870 sends a list of SCSRs to PKI 875. At step S9 the PKI 875 processes this list and returns a list of certificates to the SecO 870. At step S10 the SecO 870 inserts the VNFC certificates into the instance declarations for the VNFCs in question. If successful, at step S11 the SecO 870 sends a confirm signal to NFVO 860. Alternatively, if there is a fail then as shown at step S12 the SecO 870 sends a fail stop message to NFVO 860.

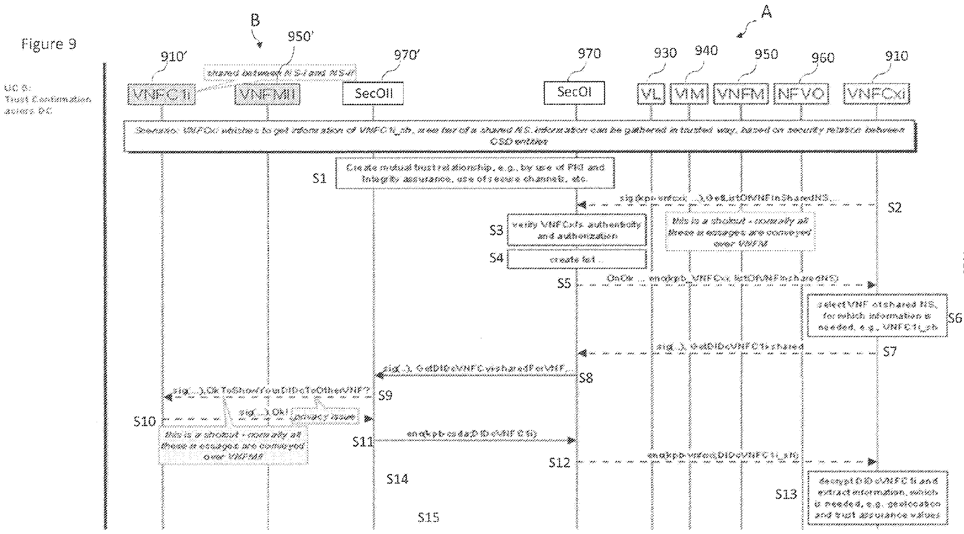

Figure 9 shows a further user case. This user case demonstrates a trust relationship between VNFs located in different data centres. In Figure 9 VNFCxi 910 is located in a first data centre "A", and VNFC1i 910' is located in data centre "B". In this scenario VNFCxi 910 wishes to get information of VNFC1i 910', which is a member of a shared network service (NS). According to this example information can be gathered in a trusted way, based on security relations between SecO entities in the different data centres A and B.

At step S1 a mutual trust relationship is set up between SecOI 970 in data centre A, and SecOII 970' in data centre B. This may be carried out for example by use of PKI and integrity assurance, use of secure channels etc. At step S2 VNFCxi 910 sends a message to SecOI 970. This message is a request for a list of other VNFs in the shared network service. At step S3 the authenticity and authorisation of the requesting VNF (i.e. VNFCxi 910) is verified. Then, at step S4 a list of VNFs in the NS is created. At step S5 this list is transmitted to VNFCxi 910. Then, at step S6 the VNFCxi 910 selects from the list a VNF in the shared network service for which information is needed or desired e.g. in this case VNFC1i 910'. Then, at step S7 a message is sent to SecOI 970 in data centre A stating that an instance declaration for VNFC1i 910' is desired by VNFCxi 910. At step S8 this message is forwarded to SecO 970' in data centre B. At step S9 SecOII 970' sends a message to VNFC1i 910' requesting whether it is okay to show its instance declaration to VNFCxi 910 in data centre A. In this case, VNFC1i 910'deems this request okay, and accordingly an "OK" message is sent at step S10 from VNFC1i 910' to SecOII 970' in data centre B. Then, at step S11 SecOII 970' forwards the instance declaration for VNFC1i 910' to SecOI 970 in data centre A. SecOI 970 then forwards this instance declaration to VNFCxi 910 in step S12. At step S13 the VNFCxi 910 decrypts the instance declaration for VNFC1i 910' and extracts information which is needed. For example the information may be geolocation and trust assurance values.

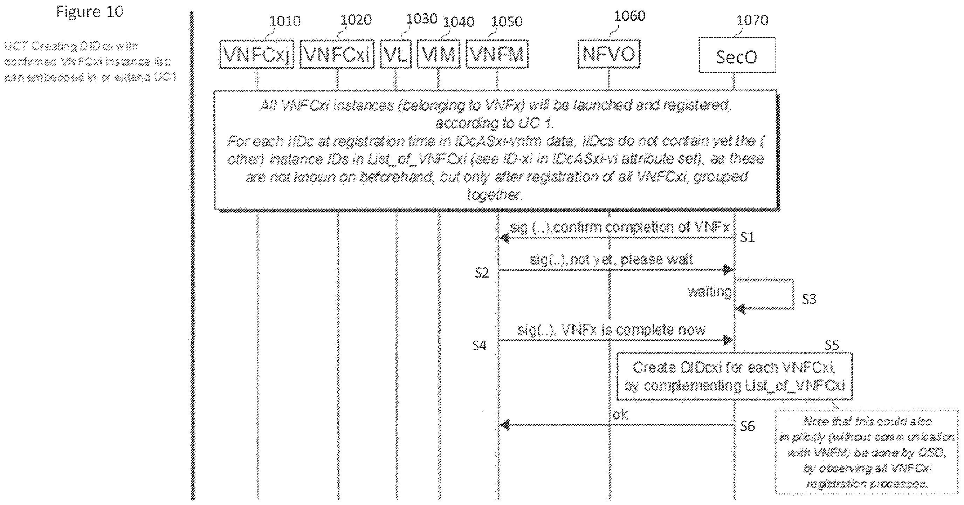

Figure 10 shows a further use case. This use case shows an example of creating dynamic instance declarations with confirmed VNFCxi instance list. This can be embedded in or as an extension to the use case described for example with respect to Figure 3. In this example all VNFCxi instances (belonging to VNFx) will be launched and registered, according to the method shown in Figure 3. For each IIDC at registration time, IIDCs do not contain yet the instance IDs in the list of VNF IDs, as these are not known beforehand, but only after registration of all VNFs, grouped together.

At step S1 SecO 1070 sends a message to VNFM 1050 confirming completion of VNFx registration. At step S2 the VNFM 1050 indicates that it is not yet ready and therefore sends a "please wait" message to SecO 1070. At step S3 the SecO 1070 waits. The SecO 1070 may wait for a predetermined time. Alternatively the SecO 1070 may wait for a time dependent upon the particular situation. At step S4 the VNF 1050 then sends a message to SecO 1070 indicating that the VNFx is now complete. Then, at step S5 SecO 1070 creates an instance declaration DIDcxi for each VNFcxi. This may involve adding them to the list of VNFcxi. Note that this step could also be implicitly carried out (without a communication with VNFM) by SecO, by observing all VNFcxi registration processes. Then at step S6 the SecO 1070 sends an "OK" message to VNFM 1050 to complete the procedure.

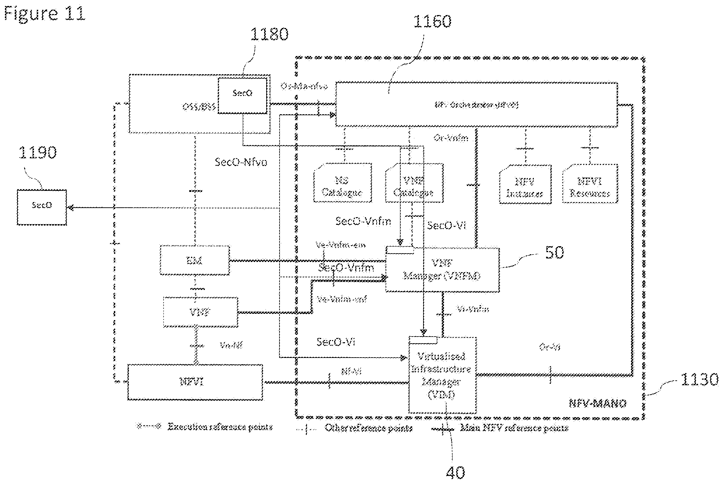

Figure 11 shows an overview according to some embodiments. Figure 11 shows for example MANO 1130 comprising VIM 1140, VNFM 1150 and NFVO 1160. A first example of a security orchestrator (SecO) is shown at 1180.

A second example of a security orchestrator (SecO) is shown at 1190. As shown, the SecO 1190 is configured for communication with at least NFVO 1160, VNFM 1150, and VIM 1140. The SecO 1190 comprises a separate block, outside MANO and outside of OSS/BSS (i.e. unlike SecO 1180 which is comprised within the OSS/BSS). At least some embodiments utilise a SecO outside MANO and outside OSS/BSS (i.e. as per SecO 1190).

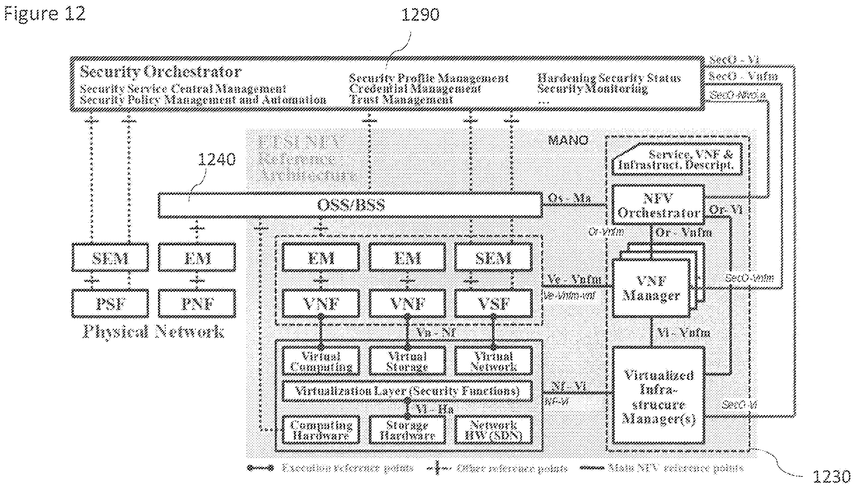

This is further shown in Figure 12. As can be seen in Figure 12, the security orchestrator 1290 exists outside of both the MANO 1230 and the OSS/BSS 1240, whilst being connected thereto as shown.

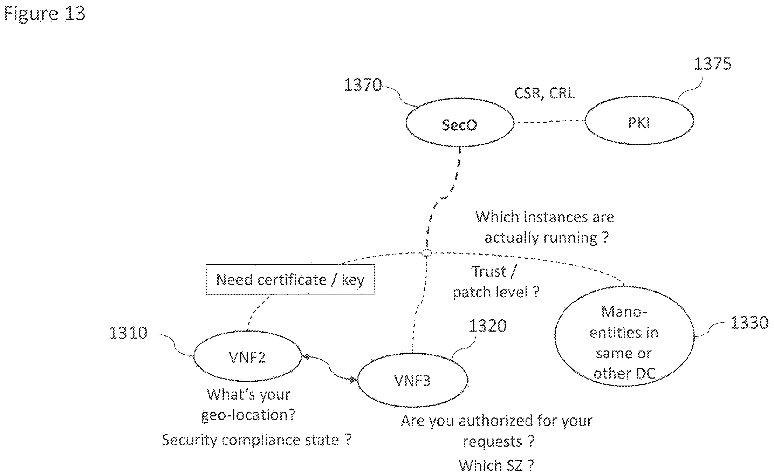

An overview of some embodiments is shown in Figure 13. In some embodiments a new SecO authority 1370 is provided for centralised key and trust establishment. In at least some embodiments the SecO 1370 exists between VNF entities 1310 and 1320 and MANO entities 1330. Optionally the SecO 1370 may also act between the VNFs and/or MANO entity and a PKI 1375. The SecO 1370 may act as a trust provided/invalidator, trust mediator and registration authority. The SecO securely manages (VNF related) identity and trust information based on "initial" and "dynamic" instance declarations per VNF (C) instance. The SecO 1370 may also enable instance registration and binding to initial key material as well as to PKI keys and credentials (e.g. certificates, CRL, CRLDP etc.). The VNF and MANO entities may use SecO and ID and trust information to get verifiable information on trust state of VNF instances (mutually). The VNF/MANO entities may also take decisions based on SecO certified and thus verifiable ID and authorisation attributes at application or management level. Furthermore the VNFs and/or MANO entities may acquire PKI related lifetime certificates/keys from the SecO. This may improve bookkeeping/asset management and security monitoring of launched instances.

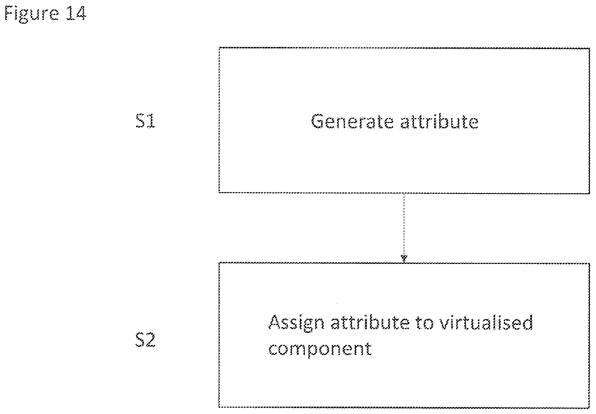

Figure 14 is a flow chart showing a method according to an embodiment. This method is viewed from the perspective of a security entity (e.g. a SecO). At step S1, an attribute is generated. The attribute is for a virtualised component operating in a virtualised environment. The attribute is generated so as to be unique to the virtualised component. The attribute is a trust attribute. At step S2 the attribute is assigned to the virtualised component.

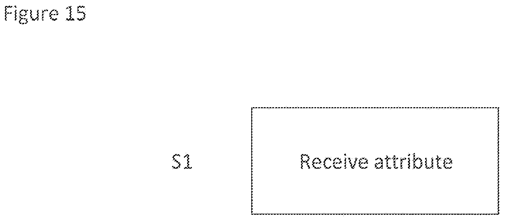

Figure 15 is a flow chart showing a method according to an embodiment. This method is viewed from the perspective of a virtualised component (e.g. a VNFC). At step S1 the virtualised component receives an attribute. The attribute may have been generated by a security entity, such as SecO (i.e. as per method of Figure 13). The attribute is unique to the virtualised component. The attribute is a trust attribute. The virtualised component can then use the trust attribute in the manners previously described.

Actual implementation of embodiments may require definition or re-definition of suited IIDc/DIDc attributes, e.g. tailored to the individual Telco Cloud context for which embodiments may be planned.

Embodiments may affect several (ETSI NFV) MANO entities and reference points, and thus require some extensions regarding the protocols mentioned in the use cases. Also, an involved VNF may contain logic to enable interworking and usage of the data elements and attributes introduced with static/dynamic instance declarations. Embodiments may be implemented in the security and trust management entities of the ETSI NVF framework, e.g., in centralized SecO components.

The new data elements and protocols could be integrated in existing systems. For instance, in some embodiments existing NSD / sNSD for data elements may be extended, as introduced with instance declaration attributes.

In some embodiments PKI entities do not need to be extended, but configured in such a way that interworking with the SecO/CSD entities is enabled.

Thus new security mechanisms may be provided, which are explicitly designed to increase trust in instantiations of virtualized network functions, associated with the dynamic nature of VNF, but in general virtual machines.

Thus, to a certain extent properties of HW boxes (as used in conventional telecommunication networks) are 'emulated', providing unique trust information (such as IDs, and equivalences to 'serial numbers' used in certification context), associated with virtualized components.

Moreover, additional new trust mechanisms may be provided, which are adapted to the specific, dynamic characteristics (location, static and dynamic integrity values, unique data) associated with individual virtual network functions, after instantiation and valid only during their lifetime. Thus, trust in such instances may be increased, but also (trust and security) management and book-keeping functions will be supported (e.g., mitigating asset protection frauds caused by illegal copies).

Although support and extension of the capabilities for security and trust management in telco clouds and particularly in ETSI NFV context is discussed, it will be understood that embodiments can be applied to other virtualisation systems as well, e.g. known in general IT context.

An appropriately adapted computer program code product or products may be used for implementing the embodiments, when loaded on an appropriate data processing apparatus, for example for determining geographical boundary based operations and/or other control operations. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may thus be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

It is also noted herein that while the above describes exemplifying embodiments of the invention, there are several variations and modifications which may be made to the disclosed solution without departing from the scope of the present invention. The invention is defined by the appended independent claims. The dependent claims define preferred embodiments.

## Claims

1. An apparatus comprising means configured at least to:
generate, during an instantiation process of a virtualised network function component (320) wherein the instantiation process comprises generation of a key-pair, of a public key infrastructure, for the virtualised network function component by a security management entity (370) external to the virtualised network, an attribute for the virtualised network function component, wherein the attribute is unique to the virtualised network function component;
assign the attribute to the virtualised network function component; and
wherein the attribute comprises a trust attribute comprising the key-pair; and
wherein the attribute is usable by the virtualised network function component for one or more of:
identification thereof in the virtualised network;
authorization thereof in the virtualised network; and
proving one or more characteristics of the virtualised network function component.

2. An apparatus as set forth in claim 1, further comprising means configured to configure the attribute to be valid only for a lifetime of the virtualised network function component.

3. An apparatus as set forth in any preceding claim, further comprising means configured to invalidate the trust attribute in response to a termination of the virtualised network function component.

4. An apparatus as set forth in any preceding claim, further comprising means configured to securely assign the attribute to the virtualised network function component using cryptographic means.

5. An apparatus comprising means configured at least to:
receive, at a virtualized network function component (320) and during an instantiation process of the virtualised network function component wherein the instantiation comprises generation of a key-pair, of a public key infrastructure, for the virtualised network function component by a security management entity (370) external to the virtualised network, an attribute to be assigned to the virtualized network function component, wherein the attribute is unique to the virtualized network function component, and wherein the attribute comprises a trust attribute comprising the key-pair; and
use the attribute for one or more of:
identification of the virtualised network function component in the virtualised network;
authorization of the virtualised network function component in the virtualised network; and
proving one or more characteristics of the virtualised network function component.

6. An apparatus as set forth in claim 5 further comprising the virtualised network function component being configured to declare information:
at a time of instantiation of the virtualised network function component; and/or
at a time after instantiation of the virtualised network function component.

7. An apparatus as set forth in claim 6, wherein the declared information comprises:
the trust attribute; and/or
information of a property of the virtualized network function component.

8. A method comprising:
generating, during an instantiation process of a virtualised network function component wherein the instantiation process comprises generation of a key-pair, of a public key infrastructure, for the virtualised network function component by a security management entity (370) external to the a virtualised network, an attribute for the virtualised network function component, wherein the attribute is unique to the virtualised network function component;
assigning the attribute to the virtualised network function component; and
wherein the attribute comprises a trust attribute comprising the key-pair; and
wherein the attribute is usable by the virtualised network function component for one or more of:
identification thereof in the virtualised network;
authorization thereof in the virtualised network; and
proving one or more characteristics of the virtualised network function component.

9. A method as set forth in claim 8, further comprising one of more of:
configuring the attribute to be valid only for a lifetime of the virtualised network function component; and
invalidating the trust attribute in response to a termination of the virtualised network function component.

10. A method as set forth in claim 8 or 9, further comprising securely assigning the attribute to the virtualised network function component using cryptographic means.

11. A method comprising:
receiving, at a virtualized network function component and during an instantiation process of the virtualised network function component (320) wherein the instantiation comprises generation of a key-pair, of a public key infrastructure, for the virtualised network function component by a security management entity (370) external to the virtualised network, an attribute to be assigned to the virtualised network function component, wherein the attribute is unique to the virtualised network function component, and wherein the attribute comprises a trust attribute comprising the key-pair; and
using the attribute for one or more of:
identification of the virtualised network function component in the virtualised network;
authorization of the virtualised network function component in the virtualised network; and
proving one or more characteristics of the virtualised network function component.

12. A method as set forth in claim 11, further comprising declaring information:
at a time of instantiation of the virtualised network function component; and/or
at a time after instantiation of the virtualised network function component.

13. A method as set forth in claim 12, wherein the declared information comprises:
the trust attribute; and/or
information of a property of the virtualized network function component.

14. Computer program instructions for causing an apparatus to perform:
generating, during an instantiation process of a virtualised network function component (320) wherein the instantiation process comprises generation of a key-pair, of a public key infrastructure, for the virtualised network function component by a security management entity (370) external to the virtualised network, an attribute for the virtualised network function component, wherein the attribute is unique to the virtualised network function component;
assigning the attribute to the virtualised network function component;
wherein the attribute comprises a trust attribute comprising the key-pair; and
wherein the attribute is usable by the virtualised network function component for one or more of:
identification thereof in the virtualised network;
authorization thereof in the virtualised network; and
proving one or more characteristics of the virtualised network function component.

15. Computer program instructions for causing an apparatus to perform:
receiving, at a virtualized network function component and during an instantiation process of the virtualised network function component (320) wherein the instantiation comprises generation of a key-pair, of a public key infrastructure, for the virtualised network function component by a security management entity (370) external to the virtualised network, an attribute to be assigned to the virtualised network function component, wherein the attribute is unique to the virtualised network function component, and wherein the attribute comprises a trust attribute comprising the key-pair; and
using the attribute for one or more of:
identification of the virtualised network function component in the virtualised network;
authorization of the virtualised network function component in the virtualised network; and
proving one or more characteristics of the virtualised network function component.

## Patentansprüche

1. Vorrichtung, die Mittel umfasst, die mindestens zu Folgendem ausgelegt sind:
Erzeugen eines Attributs für eine virtualisierte Netzwerkfunktionskomponente während eines Instanziierungsprozesses der virtualisierten Netzwerkfunktionskomponente (320), wobei der Instanziierungsprozess die Erzeugung eines Schlüsselpaares einer öffentlichen Schlüsselinfrastruktur für die virtualisierte Netzwerkfunktionskomponente durch eine Sicherheitsverwaltungsentität (370) außerhalb des virtualisierten Netzwerks,umfasst, wobei sich das Attribut speziell auf die virtualisierte Netzwerkfunktionskomponente bezieht;
Zuweisen des Attributs zur virtualisierten Netzwerkfunktionskomponente und
wobei das Attribut ein Vertrauensattribut umfasst, das das Schlüsselpaar umfasst; und
wobei das Attribut von der virtualisierten Netzwerkfunktionskomponente für eines oder mehreres von Folgendem verwendbar ist:
Identifikation davon im virtualisierten Netzwerk;
Autorisierung davon im virtualisierten Netzwerk und
Beweisen von einer oder mehreren Charakteristiken der virtualisierten Netzwerkfunktionskomponente.

2. Vorrichtung nach Anspruch 1, die ferner Mittel umfasst, die dazu ausgelegt sind, das Attribut derart auszulegen, dass es nur für eine Lebensdauer der virtualisierten Netzwerkfunktionskomponente gültig ist.

3. Vorrichtung nach einem der vorhergehenden Ansprüche, die ferner Mittel umfasst, die dazu ausgelegt sind, in Reaktion auf eine Beendigung der virtualisierten Netzwerkfunktionskomponente das Vertrauensattribut ungültig zu machen.

4. Vorrichtung nach einem der vorhergehenden Ansprüche, die ferner Mittel umfasst, die dazu ausgelegt sind, das Attribut unter Verwendung von kryptographischen Mitteln der virtualisierten Netzwerkfunktionskomponente sicher zuzuweisen.

5. Vorrichtung, die Mittel umfasst, die mindestens zu Folgendem ausgelegt sind:
Empfangen eines Attributs, das der virtualisierten Netzwerkfunktionskomponente zuzuweisen ist, an einer virtualisierten Netzwerkfunktionskomponente (320) und während eines Instanziierungsprozesses der virtualisierten Netzwerkfunktionskomponente, wobei die Instanziierung die Erzeugung eines Schlüsselpaares einer öffentlichen Schlüsselinfrastruktur für die virtualisierte Netzwerkfunktionskomponente durch eine Sicherheitsverwaltungsentität (370) außerhalb des virtualisierten Netzwerks umfasst, wobei sich das Attribut speziell auf die virtualisierte Netzwerkfunktionskomponente bezieht und wobei das Attribut ein Vertrauensattribut umfasst, das das Schlüsselpaar umfasst; und
Verwenden des Attributs für eines oder mehreres von Folgendem:
Identifikation der virtualisierten Netzwerkfunktionskomponente im virtualisierten Netzwerk;
Autorisierung der virtualisierten Netzwerkfunktionskomponente im virtualisierten Netzwerk und
Beweisen von einer oder mehreren Charakteristiken der virtualisierten Netzwerkfunktionskomponente.

6. Vorrichtung nach Anspruch 5, die ferner die virtualisierte Netzwerkfunktionskomponente umfasst, die dazu ausgelegt ist, Informationen zu deklarieren:
zu einer Zeit der Instanziierung der virtualisierten Netzwerkfunktionskomponente und/oder
zu einer Zeit nach der Instanziierung der virtualisierten Netzwerkfunktionskomponente.

7. Vorrichtung nach Anspruch 6, wobei die deklarierten Informationen Folgendes umfassen:
das Vertrauensattribut und/oder
Informationen zu einer Eigenschaft der virtualisierten Netzwerkfunktionskomponente.

8. Verfahren, das Folgendes umfasst:
Erzeugen eines Attributs für eine virtualisierte Netzwerkfunktionskomponente während eines Instanziierungsprozesses der virtualisierten Netzwerkfunktionskomponente, wobei der Instanziierungsprozess die Erzeugung eines Schlüsselpaares einer öffentlichen Schlüsselinfrastruktur für die virtualisierte Netzwerkfunktionskomponente durch eine Sicherheitsverwaltungsentität (370) außerhalb des virtualisierten Netzwerks umfasst, wobei sich das Attribut speziell auf die virtualisierte Netzwerkfunktionskomponente bezieht;
Zuweisen des Attributs zur virtualisierten Netzwerkfunktionskomponente und
wobei das Attribut ein Vertrauensattribut umfasst, das das Schlüsselpaar umfasst; und
wobei das Attribut von der virtualisierten Netzwerkfunktionskomponente für eines oder mehreres von Folgendem verwendbar ist:
Identifikation davon im virtualisierten Netzwerk;
Autorisierung davon im virtualisierten Netzwerk und
Beweisen von einer oder mehreren Charakteristiken der virtualisierten Netzwerkfunktionskomponente.

9. Verfahren nach Anspruch 8, das ferner eines von mehrerem von Folgendes umfasst:
Auslegen des Attributs derart, dass es nur für eine Lebensdauer der virtualisierten Netzwerkfunktionskomponente gültig ist; und
Ungültigmachen des Vertrauensattributs in Reaktion auf eine Beendigung der virtualisierten Netzwerkfunktionskomponente.

10. Verfahren Anspruch 8 oder 9, die ferner das sichere Zuweisen des Attributs unter Verwendung von kryptographischen Mitteln zur virtualisierten Netzwerkfunktionskomponente umfasst.

11. Verfahren, das Folgendes umfasst:
Empfangen eines Attributs, das der virtualisierten Netzwerkfunktionskomponente zuzuweisen ist, an einer virtualisierten Netzwerkfunktionskomponente und während eines Instanziierungsprozesses der virtualisierten Netzwerkfunktionskomponente (320), wobei die Instanziierung die Erzeugung eines Schlüsselpaares einer öffentlichen Schlüsselinfrastruktur für die virtualisierte Netzwerkfunktionskomponente durch eine Sicherheitsverwaltungsentität (370) außerhalb des virtualisierten Netzwerks umfasst, wobei sich das Attribut speziell auf die virtualisierte Netzwerkfunktionskomponente bezieht und wobei das Attribut ein Vertrauensattribut umfasst, das das Schlüsselpaar umfasst; und
Verwenden des Attributs für eines oder mehreres von Folgendem:
Identifikation der virtualisierten Netzwerkfunktionskomponente im virtualisierten Netzwerk;
Autorisierung der virtualisierten Netzwerkfunktionskomponente im virtualisierten Netzwerk und
Beweisen von einer oder mehreren Charakteristiken der virtualisierten Netzwerkfunktionskomponente.

12. Verfahren nach Anspruch 11, das ferner das Deklarieren von Informationen umfasst:
zu einer Zeit der Instanziierung der virtualisierten Netzwerkfunktionskomponente und/oder
zu einer Zeit nach der Instanziierung der virtualisierten Netzwerkfunktionskomponente.

13. Verfahren nach Anspruch 12, wobei die deklarierten Informationen Folgendes umfassen:
das Vertrauensattribut und/oder
Informationen zu einer Eigenschaft der virtualisierten Netzwerkfunktionskomponente.

14. Computerprogrammanweisungen zum Bewirken, dass eine Vorrichtung Folgendes durchführt:
Erzeugen eines Attributs für eine virtualisierte Netzwerkfunktionskomponente während eines Instanziierungsprozesses der virtualisierten Netzwerkfunktionskomponente (320), wobei der Instanziierungsprozess die Erzeugung eines Schlüsselpaares einer öffentlichen Schlüsselinfrastruktur für die virtualisierte Netzwerkfunktionskomponente durch eine Sicherheitsverwaltungsentität (370) außerhalb des virtualisierten Netzwerks umfasst, wobei sich das Attribut speziell auf die virtualisierte Netzwerkfunktionskomponente bezieht;
Zuweisen des Attributs zur virtualisierten Netzwerkfunktionskomponente;
wobei das Attribut ein Vertrauensattribut umfasst, das das Schlüsselpaar umfasst; und
wobei das Attribut von der virtualisierten Netzwerkfunktionskomponente für eines oder mehreres von Folgendem verwendbar ist:
Identifikation davon im virtualisierten Netzwerk;
Autorisierung davon im virtualisierten Netzwerk und
Beweisen von einer oder mehreren Charakteristiken der virtualisierten Netzwerkfunktionskomponente.

15. Computerprogrammanweisungen zum Bewirken, dass eine Vorrichtung Folgendes durchführt:
Empfangen eines Attributs, das der virtualisierten Netzwerkfunktionskomponente zuzuweisen ist, an einer virtualisierten Netzwerkfunktionskomponente und während eines Instanziierungsprozesses der virtualisierten Netzwerkfunktionskomponente (320), wobei die Instanziierung die Erzeugung eines Schlüsselpaares einer öffentlichen Schlüsselinfrastruktur für die virtualisierte Netzwerkfunktionskomponente durch eine Sicherheitsverwaltungsentität (370) außerhalb des virtualisierten Netzwerks umfasst, wobei sich das Attribut speziell auf die virtualisierte Netzwerkfunktionskomponente bezieht und wobei das Attribut ein Vertrauensattribut umfasst, das das Schlüsselpaar umfasst; und
Verwenden des Attributs für eines oder mehreres von Folgendem:
Identifikation der virtualisierten Netzwerkfunktionskomponente im virtualisierten Netzwerk;
Autorisierung der virtualisierten Netzwerkfunktionskomponente im virtualisierten Netzwerk und
Beweisen von einer oder mehreren Charakteristiken der virtualisierten Netzwerkfunktionskomponente.

## Revendications

1. Appareil comprenant des moyens configurés au moins pour :
générer, pendant un processus d'instanciation d'un composant de fonction de réseau virtualisé (320) dans lequel le processus d'instanciation comprend la génération d'une paire de clés, d'une infrastructure à clés publiques, pour le composant de fonction de réseau virtualisé par une entité de gestion de sécurité (370) externe au réseau virtualisé, un attribut pour le composant de fonction de réseau virtualisé, dans lequel l'attribut est unique au composant de fonction de réseau virtualisé ;
assigner l'attribut au composant de fonction de réseau virtualisé ; et
dans lequel l'attribut comprend un attribut de confiance comprenant la paire de clés ; et
dans lequel l'attribut est utilisable par le composant de fonction de réseau virtualisé pour un ou plusieurs parmi :
son identification dans le réseau virtualisé ;
son autorisation dans le réseau virtualisé ; et
prouver une ou plusieurs caractéristiques du composant de fonction de réseau virtualisé.

2. Appareil selon la revendication 1, comprenant en outre des moyens configurés pour configurer l'attribut pour qu'il ne soit valide que pendant la durée de vie du composant de fonction de réseau virtualisé.

3. Appareil selon une quelconque revendication précédente, comprenant en outre des moyens configurés pour invalider l'attribut de confiance en réponse à une terminaison du composant de fonction de réseau virtualisé.

4. Appareil selon une quelconque revendication précédente, comprenant en outre des moyens configurés pour assigner de manière sécurisée l'attribut au composant de fonction de réseau virtualisé en utilisant des moyens cryptographiques.

5. Appareil comprenant des moyens configurés au moins pour :
recevoir, au niveau d'un composant de fonction de réseau virtualisé (320) et pendant un processus d'instanciation du composant de fonction de réseau virtualisé dans lequel l'instanciation comprend la génération d'une paire de clés, d'une infrastructure à clés publiques, pour le composant de fonction de réseau virtualisé par une entité de gestion de sécurité (370) externe au réseau virtualisé, un attribut à assigner au composant de fonction de réseau virtualisé, dans lequel l'attribut est unique au composant de fonction de réseau virtualisé, et dans lequel l'attribut comprend un attribut de confiance comprenant la paire de clés ; et
utiliser l'attribut pour un ou plusieurs parmi :
l'identification du composant de fonction de réseau virtualisé dans le réseau virtualisé ;
l'autorisation du composant de fonction de réseau virtualisé dans le réseau virtualisé ; et
prouver une ou plusieurs caractéristiques du composant de fonction de réseau virtualisé.

6. Appareil selon la revendication 5, comprenant en outre le composant de fonction de réseau virtualisé qui est configuré pour déclarer des informations :
à un temps d'instanciation du composant de fonction de réseau virtualisé ; et/ou
à un temps après l'instanciation du composant de fonction de réseau virtualisé.

7. Appareil selon la revendication 6, dans lequel les informations déclarées comprennent :
l'attribut de confiance ; et/ou
des informations d'une propriété du composant de fonction de réseau virtualisé.

8. Procédé comprenant :
la génération, pendant un processus d'instanciation d'un composant de fonction de réseau virtualisé dans lequel le processus d'instanciation comprend la génération d'une paire de clés, d'une infrastructure à clés publiques, pour le composant de fonction de réseau virtualisé par une entité de gestion de sécurité (370) externe au réseau virtualisé, d'un attribut pour le composant de fonction de réseau virtualisé, dans lequel l'attribut est unique au composant de fonction de réseau virtualisé ;
l'assignation de l'attribut au composant de fonction de réseau virtualisé ; et
dans lequel l'attribut comprend un attribut de confiance comprenant la paire de clés ; et
dans lequel l'attribut est utilisable par le composant de fonction de réseau virtualisé pour un ou plusieurs parmi :
son identification dans le réseau virtualisé ;
son autorisation dans le réseau virtualisé ; et
prouver une ou plusieurs caractéristiques du composant de fonction de réseau virtualisé.

9. Procédé selon la revendication 8, comprenant en outre un ou plusieurs parmi :
la configuration de l'attribut pour qu'il ne soit valide que pendant la durée de vie du composant de fonction de réseau virtualisé ; et
l'invalidation de l'attribut de confiance en réponse à une terminaison du composant de fonction de réseau virtualisé.

10. Procédé selon la revendication 8 ou 9, comprenant en outre l'assignation sécurisée de l'attribut au composant de fonction de réseau virtualisé en utilisant des moyens cryptographiques.

11. Procédé comprenant :
la réception, au niveau d'un composant de fonction de réseau virtualisé et pendant un processus d'instanciation du composant de fonction de réseau virtualisé (320) dans lequel l'instanciation comprend la génération d'une paire de clés, d'une infrastructure à clés publiques, pour le composant de fonction de réseau virtualisé par une entité de gestion de sécurité (370) externe au réseau virtualisé, d'un attribut à assigner au composant de fonction de réseau virtualisé, dans lequel l'attribut est unique au composant de fonction de réseau virtualisé, et dans lequel l'attribut comprend un attribut de confiance comprenant la paire de clés ; et
l'utilisation de l'attribut pour un ou plusieurs parmi :
l'identification du composant de fonction de réseau virtualisé dans le réseau virtualisé ;
l'autorisation du composant de fonction de réseau virtualisé dans le réseau virtualisé ; et
prouver une ou plusieurs caractéristiques du composant de fonction de réseau virtualisé.

12. Procédé selon la revendication 11, comprenant en outre la déclaration d'informations :
à un temps d'instanciation du composant de fonction de réseau virtualisé ; et/ou
à un temps après l'instanciation du composant de fonction de réseau virtualisé.

13. Procédé selon la revendication 12, dans lequel les informations déclarées comprennent :
l'attribut de confiance ; et/ou
des informations d'une propriété du composant de fonction de réseau virtualisé.

14. Instructions de programme informatique pour amener un appareil à effectuer :
la génération, pendant un processus d'instanciation d'un composant de fonction de réseau virtualisé (320) dans lequel le processus d'instanciation comprend la génération d'une paire de clés, d'une infrastructure à clés publiques, pour le composant de fonction de réseau virtualisé par une entité de gestion de sécurité (370) externe au réseau virtualisé, d'un attribut pour le composant de fonction de réseau virtualisé, dans lequel l'attribut est unique au composant de fonction de réseau virtualisé ;
l'assignation de l'attribut au composant de fonction de réseau virtualisé ;
dans lequel l'attribut comprend un attribut de confiance comprenant la paire de clés ; et
dans lequel l'attribut est utilisable par le composant de fonction de réseau virtualisé pour un ou plusieurs parmi :
son identification dans le réseau virtualisé ;
son autorisation dans le réseau virtualisé ; et
prouver une ou plusieurs caractéristiques du composant de fonction de réseau virtualisé.

15. Instructions de programme informatique pour amener un appareil à effectuer :
la réception, au niveau d'un composant de fonction de réseau virtualisé et pendant un processus d'instanciation du composant de fonction de réseau virtualisé (320) dans lequel l'instanciation comprend la génération d'une paire de clés, d'une infrastructure à clés publiques, pour le composant de fonction de réseau virtualisé par une entité de gestion de sécurité (370) externe au réseau virtualisé, d'un attribut à assigner au composant de fonction de réseau virtualisé, dans lequel l'attribut est unique au composant de fonction de réseau virtualisé, et dans lequel l'attribut comprend un attribut de confiance comprenant la paire de clés ; et
l'utilisation de l'attribut pour un ou plusieurs parmi :
l'identification du composant de fonction de réseau virtualisé dans le réseau virtualisé ;
l'autorisation du composant de fonction de réseau virtualisé dans le réseau virtualisé ; et
prouver une ou plusieurs caractéristiques du composant de fonction de réseau virtualisé.
